(19) Europäisches Patentamt

European Patent Office

Office européen des brevets

(11) **EP 0 998 113 A1**

(12) **EUROPEAN PATENT APPLICATION**
published in accordance with Art. 158(3) EPC

(43) Date of publication:
**03.05.2000 Bulletin 2000/18**

(51) Int. Cl.$^7$: **H04N 1/00**, H04N 1/04,
G06T 1/00

(21) Application number: **99917182.0**

(22) Date of filing: **27.04.1999**

(86) International application number:
**PCT/JP99/02241**

(87) International publication number:
**WO 99/56458 (04.11.1999 Gazette 1999/44)**

(84) Designated Contracting States:
**DE FR GB**

(30) Priority: **27.04.1998 JP 11661498**
**27.04.1998 JP 11664898**

(71) Applicant: **PFU LIMITED**
**Kahoku-gun Ishikawa 929-1192 (JP)**

(72) Inventors:
• **HONDA, Keiji**
**Kahoku-gun, Isikawa 929-1192 (JP)**

• **NITTA, Syuu**
**Kahoku-gun, Isikawa 929-1192 (JP)**
• **HASHIMOTO, Masahide**
**Kahoku-gun, Isikawa 929-1192 (JP)**

(74) Representative:
**Reichel, Wolfgang, Dipl.-Ing. et al**
**Reichel und Reichel**
**Parkstrasse 13**
**60322 Frankfurt (DE)**

(54) **METHOD FOR MEASURING IMAGE NOISE OF IMAGE READER, RESOLUTION MEASURING APPARATUS AND RESOLUTION MEASURING METHOD, AND RECORDING MEDIUM THEREFOR**

(57)     In measuring image noise of an image reader, image data obtained as a result of reading a read region of a test chart having a constant density are analyzed by an image analyzing program of a computer, so that an anomalous portion of the image data is extracted and is judged whether the anomalous portion is noise, on the basis of a predetermined standard. Further, in measuring the resolution of an image reader, a test chart having white/black line pair patterns, which are formed at a pitch slightly different from the read pixel pitch of the image reader, is read over a region which is large enough to include a location where coincidence occurs between patterns and pixels. A necessary portion is cut out from the read image, and a gradation difference for each pixel of the read image over the entirety of the cut-out region is calculated in order to detect the maximum gradation difference. When the maximum gradation difference exceeds a value for defective/non-defective judgment, the image reader is judged to have passed a resolution test.

FIG. 3

**Description**

TECHNICAL FIELD

The present invention relates to a method of measuring image noise of an image reader, a method of measuring resolution of the image reader, and program recording mediums storing programs for carrying out the methods. More particularly, the present invention relates to a method in which noise in an image output from an image reader —which is connected to a host apparatus in order to provide the host apparatus with image data— is measured quantitatively, and judgment is made as to whether the image reader is non-defective or defective, on the basis of a predetermined standard; a method of measuring resolution which enables performance of an automated, computerized resolution test for judging whether a CCD element corresponding to a single pixel can resolve a single bar; and program recording mediums storing programs for carrying out the methods.

BACKGROUND ART

Noise contained in an image which is read by use of an image reader —which is connected to a host apparatus in order to provide the host apparatus with image data— deteriorates the quality of the image, resulting in deterioration in reproducibility of an original document. Elimination of such noise is important, in view of realization of stable performance of the image reader. Accordingly, accurate measurement of noise generated in an image reader is equivalent to determining the actual status of the image reader and is indispensable for removing a cause of generation of noise.

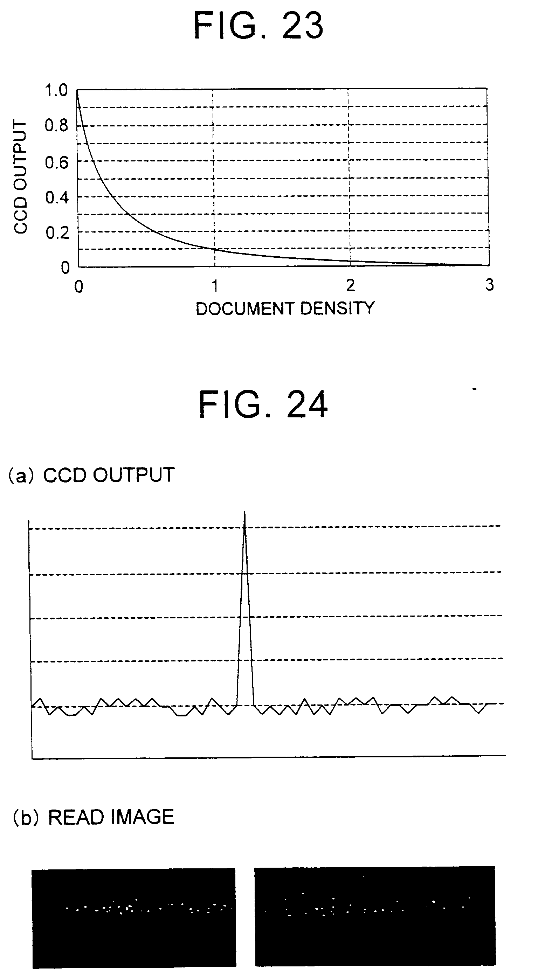

The case of a transparent original document will be considered as an exemplary case. The output of a CCD element which receives light passing through a transparent original document is known not to change linearly with the density of the original document, but to change exponentially, as shown in FIG. 23. This indicates that the degree of influence of noise contained in the output of the CCD element changes depending on the density of the original document. Therefore, when noise is measured through use of an original document carrying a certain image, the generated noise can be measured reliably through an operation of reading a plurality of original documents carrying the same image at different densities.

A case where dust or the like enters the image reader and disables a certain CCD element from detecting light will be described with reference to FIG. 24.

As shown FIG. 24(a), a portion of image data corresponding to the disabled CCD element assumes an eminent value. Therefore, as shown in FIG. 24(b), when the image reader reads an original document having uniform density, image data are not present at a location corresponding to disabled CCD element, so that a longitudinal strip (a cluster of white dots extending in the transverse direction in FIG. 24(b)) appears.

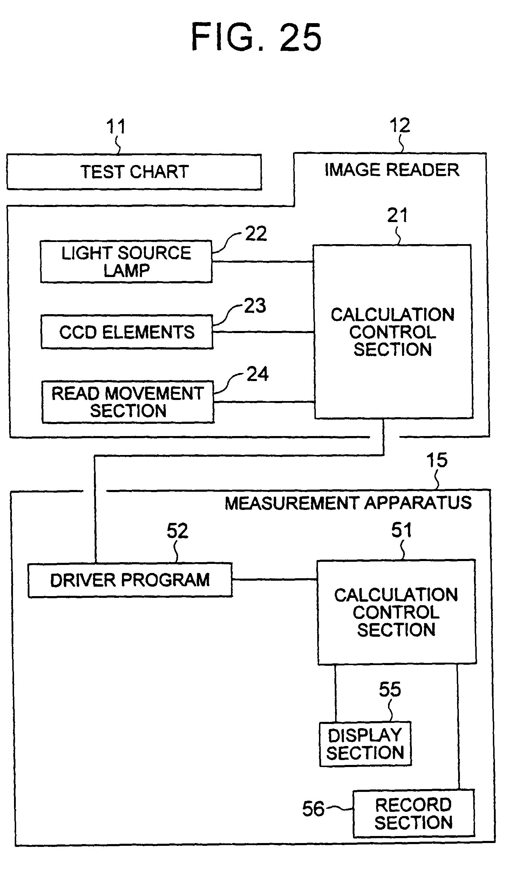

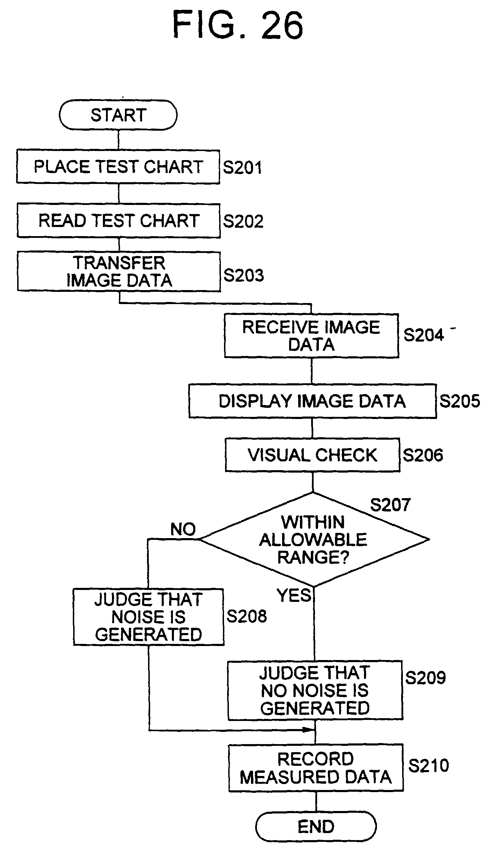

A conventional process flow for measuring noise in a process for testing an image reader will be described with reference to FIGS. 25 and 26. FIG. 25 is a block diagram of an image reader and a measuring apparatus, and FIG. 26 is a flowchart for measuring noise.

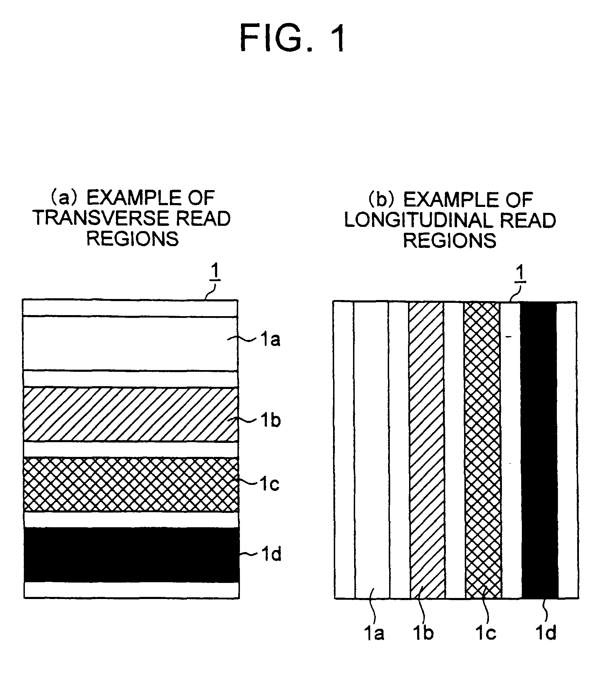

As shown in FIG. 25, a test chart 11 is placed on an image reader 12. Light emitted from a light source lamp 22 passes through the test chart 11. CCD elements 23 sense light that has passed through the test chart 11 and outputs an electrical signal. A test chart 1 which, as shown in FIG. 1, has a plurality of read regions 1a, 1b, 1c, and 1d, is used as the test chart 11. A read movement section 24 causes a reading unit equipped with the CCD elements 23 to move along a sub-scan direction and thereby read a document. A calculation control section 21 amplifies the electrical signal output from the CCD elements 23 to a suitable level, converts the amplified signal into image data, and transfers the image data to a measurement apparatus 15. A driver program 52 of the measurement apparatus 15 receives the image data output from the image reader 12 and transfers the image data to a calculation control section 51. The calculation control section 51 displays the image data on a display section 55, thereby allowing an operator of the measurement apparatus 15 to visually check the image data.

In step S201 in FIG. 26, the operator places the test chart 11 on the image reader 12 to be tested. In step S202, the test chart 11 is read by the image reader 12, and in step S203, the image data are transmitted to the measurement apparatus 15. The measurement apparatus 15 receives the image data in step S204 and proceeds to step S205 in order to display the image data on the display section 55. In step S206, the operator visually checks the image data. When in step S207 a judgment is made that measured noise is within a predetermined allowable range, the measuring apparatus 15 proceeds to step S209 so as to judge that no noise is present. In this case, the image reader 12 is transferred to a next station as an apparatus that requires no rework. When the measured noise is beyond the predetermined allowable range, the measuring apparatus 15 proceeds to step S208 so as to judge that noise is present. In this case, the image reader 12 is transferred to a predetermined rework station as an apparatus that requires rework. In step S210, data indicating test results are stored in a record section 56. Subsequently, the noise measurement process is ended.

The above-described conventional method of measuring noise in a process of testing the image reader 12 involves the following problems.

Extraction and measurement of noise of an image and pass-fail judgment regarding noise are performed by an operator through visual check of an image which is obtained as a result of reading the test chart 11 and is displayed on the display section 55 of the measurement apparatus 15. That is, the noise measuring method performed in the test step relies on a sensory test performed by the operator. Accordingly, the skill level of the operator greatly affects the test results. Further, the test results are affected not only by the operator's personal attributes such as eyesight, but also by the operator's health condition on the day of testing. Therefore, establishing a univocal standard for judgment is difficult.

Meanwhile, the resolution of the image reader has a close relationship with the above-described image noise. The resolution of the image reader represents the finest pattern that the image reader can recognize, and depends on the lenses and CCD of the image reader. Therefore, the resolution can be increased when an image is read by the CCD after being magnified by a plurality of lenses.

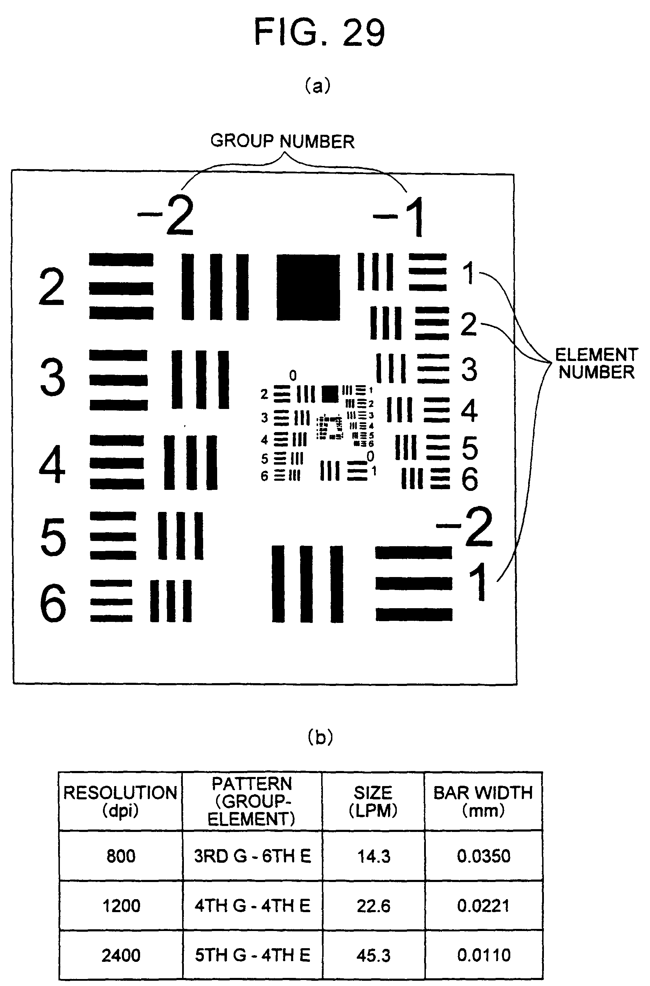

FIG. 29 shows a test chart which is generally used for testing the resolution of an optical component or an optical system. As shown in FIG. 29(a), the test chart comprises a plurality of groups each consisting of three vertical bars, two spaces for separating the vertical bars, three horizontal bars, and two spaces for separating the horizontal bars. The groups are disposed in a regular pattern from the outside edges of the chart to the inside region of the chart while the pattern size is decreased gradually.

When the resolution of an image reader is to be examined, the image reader is caused to read the test chart shown in FIG. 29(a), and image data output from the image reader are checked. Specifically, the resolution of the image reader can be determined on the basis of the size of the smallest pattern in which the three bars can be recognized. When a resolution of 2400 dpi is specified as part of the basic specifications of the image reader, bars having a width of 11 μm must be recognized, as shown in the table of FIG. 29 (b).

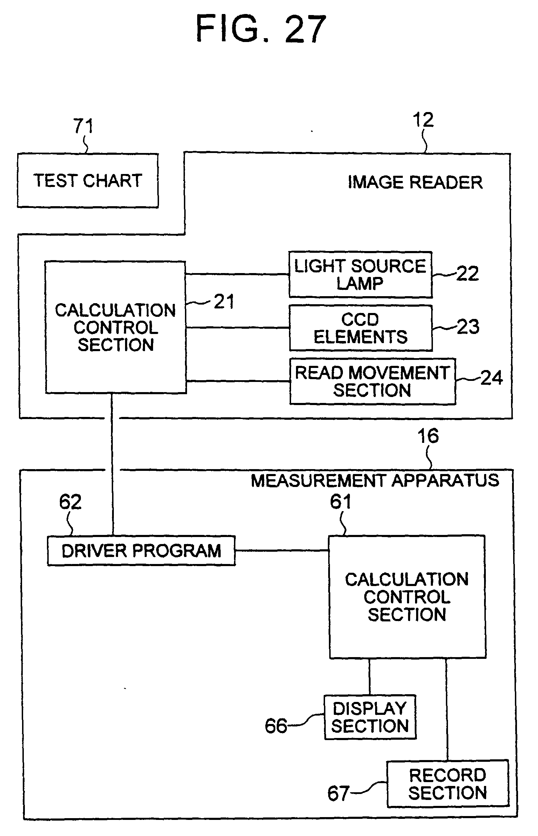

FIG. 27 shows the structure of the conventional test system. As shown in FIG. 27, in order to test the resolution of an image reader 12, the test chart 71 shown in FIG. 29, the image reader 12, and a measurement apparatus 16 are used in combination in order to constitute a test system. In accordance with instructions from the measurement apparatus 16, the calculation control section 21 of the image reader 12 controls the operations of a light source lamp 22, CCD elements 23 and a read movement section 24, and transmits to the measurement apparatus 16 image data obtained as a result of reading the test chart 71. The measurement apparatus 16 is controlled by a calculation control section 61 in order to exchange data with the image reader 12 via a driver program 62. The calculation control section 61 processes received image data and displays the read image on a display section 66 in an enlarged manner. The pass-fail judgment regarding resolution is performed through visual check of title image displayed on the display section 66. Data representing test results are stored in a record section 67.

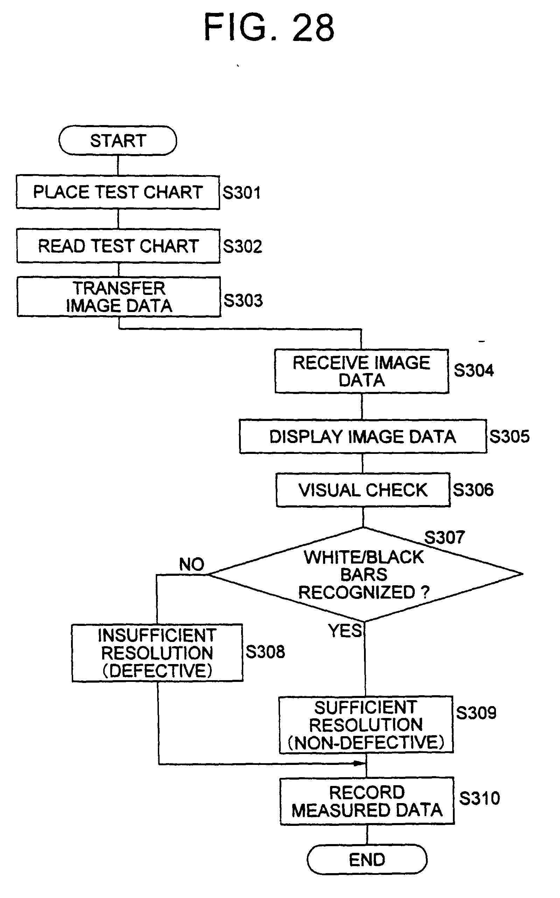

Processing procedures according to the prior art technique will be described with reference to FIG. 28. The same reference symbols as those shown in FIG. 27 will be used.

In step S301, the operator places the test chart 71 at a predetermined position on the image reader 12 to be tested. In step S302, the image reader 12 drives the light source lamp 22, the CCD elements 23, and the read movement section 24 to start reading the test chart 71. In step S303, image data obtained as a result of reading the image are transmitted to the measurement apparatus 16. In step S304, the measurement apparatus 16 receives the image data, which are then processed in the calculation control section 61. In step S305, the image data are displayed on the display section 66 in an enlarged manner. In step S306, the operator visually checks the image displayed on the display section 66. In step S307, the operator judges whether three bars can be recognized in the image displayed on the display section 66. When three bars are not recognized, in step S308, the image reader 12 is judged not to have a resolution specified in the basic specifications; i.e., to be a defective product. When three bars are recognized, in step S309, the image reader 12 is judged to have a resolution specified in the basic specifications; i.e., to be a non-defective product. In step S310, data indicating measurement results are stored in a memory section 67. Subsequently, the resolution measurement process is ended.

As described above, the test for determining the resolution of the image reader 12 which has a resolution of 2400 dpi as part of basic specifications is performed by a skilled worker through visual judgment of a read image displayed in an enlarged manner. Therefore, in the exemplary case where a test is performed by use of a generally know universal test chart as shown in FIG. 29, the following problems occur. First, judgment by a human operator becomes necessary for the mast important judgment; i.e., a judgment as to whether an associated pattern can be seen. Second, the person who makes judgment is required to have a wealth of experience and sensitivity in recognizing images. Third, only a small amount of data remain as test results. These problems result in weak points in the production system and the quality assurance system for the image reader 12.

In order to construct an efficient system for producing the image reader 12, the resolution test is desired to be realized by means of computer processing. For recognition of white and black bars, both the black bars and spaces that separate the black bars must be sensed. Further, when bars and spaces are distinguished from each other, the contrast between pixels corresponding to the bars and pixels corresponding to the spaces becomes very important.

When the contrast is high, the bars and spaces can be clearly distinguished from each other. When the contrast low, the distinction becomes difficult. Therefore, through establishment of a relationship between the above-described contrast and the sense of a human, computer processing for the resolution test can be realized.

In the image reader 12, light reflected from a document or passed through the document is caused to enter a CCD line sensor (23) to thereby form an image thereon, and the received light is converted into an electrical signal, which is then subjected to internal processing. Accordingly, the relation between the size of the CCD light receiving portion and the size of the image of the document (71) formed on the CCD line sensor greatly affects the level of contrast.

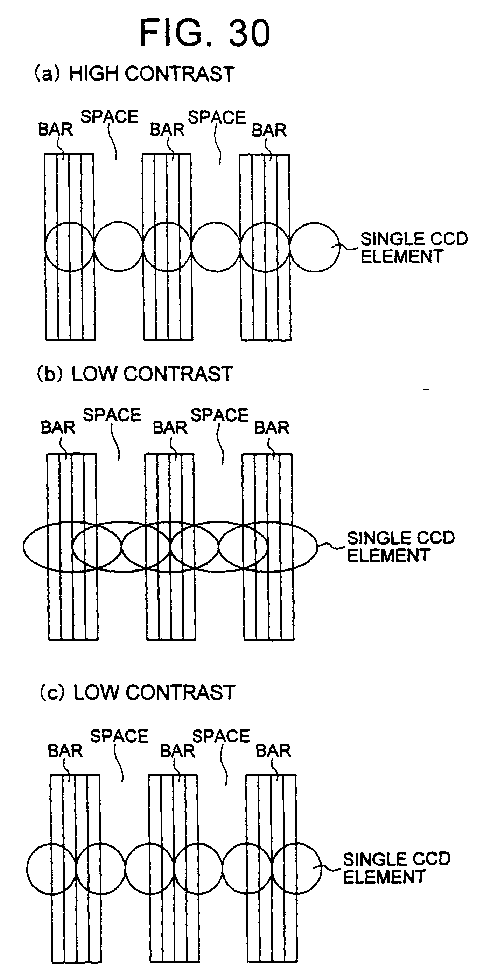

FIG. 30 shows several cases. FIG. 30(a) shows a case in which the balance between the size of a pattern and the size of a single CCD element is good; the positional relationship between the pattern and the CCD element is good; and the contrast is high. FIG. 30(b) shows a state in which the positional relationship between the pattern and the CCD element is good, but the balance between the size of a pattern and the size of a single CCD element is poor due to fuzziness or other cause, so that the contrast becomes low. FIG. 30(c) shows a state in which the balance between the size of a pattern and the size of a single CCD element is good, but a positional deviation exists between the pattern and the CCD element, so that the contrast becomes low.

The purpose of the resolution test is to find the state shown in FIG. 30(b) for judgment of defective sensing. However, the state shown in FIG. 30(b) cannot be distinguished from the state shown in FIG. 30(c) through mere contrast measurement. Further, it is impossible to control the positional relationship between an optical unit and a test chart on the level of microns, and fixing the positional relationship in all image readers is impossible as well. Therefore, it is expected that the state shown in FIG. 30(a) is created in only a very small number of image readers, and that the state shown in FIG. 30(c) is created in most image readers. Therefore, in order to perform a resolution test for judging whether a CCD element corresponding to a single pixel can resolve a single bar, the position of the pixel must coincide with the position of the bar. Therefore, an operator performs such a judgment operation, while finely adjusting the position of the test chart and eliminating other possible causes which would produce errors, such as dust or scratches.

The above-described conventional method of measuring the image resolution of the image reader 12 involves the following problems.

First, when the universal test chart 71 is used in the resolution test for judging whether a CCD element corresponding to a single pixel can resolve a single bar, the operation of setting the test chart 71 becomes extremely difficult, resulting in difficulty in establishing an efficient production system. Second, when the resolution test is computerized, it becomes impossible to distinguish the state in which the contrast becomes low due to imbalance between the size of a pattern and the size of a single CCD element from the state in which the contrast becomes low due to a positional deviation between the pattern and the CCD element.

An object of the present invention is to provide a method of measuring image noise of an image reader, which can univocally judge presence/absence of image noise.

Another object of the present invention is to provide a program recording medium which stores therein a program for carrying out a method of measuring image noise of an image reader, which can univocally judge presence/absence of image noise.

Still anther object of the present invention is to provide an apparatus for measuring resolution of an image reader which allows free positioning of a test chart.

Yet anther object of the present invention is to provide a method of measuring resolution of an image reader which allows free positioning of a test chart.

A further object of the present invention is to provide a program recording medium which stores therein a program for carrying out the method of measuring resolution of an image reader which allows free positioning of a test chart.

DISCLOSURE OF THE INVENTION

In a method of measuring image noise of an image reader according to one embodiment of the present invention, an image reader is caused to read a test chart having a read region of constant density so as to collect image data, and the image data are analyzed in order to obtain the degree of irregularity (variation) of each piece of image data. When the degree of irregularity of each piece of image data exceeds a predetermined limit, the image reader is judged to have image noise.

The image noise measurement method enables univocal judgment as to presence/absence of image noise, through analysis of image data obtained as a result of reading the constant-density read region of the test chart.

In a method of measuring image noise of an image reader according to another embodiment of the present invention, an image reader is caused to read a test chart having a read region of constant density so as to collect image data, and the image data are analyzed in order to obtain a difference between an average value that is calculated at a certain position along a longitudinal direction or a transverse direction and an average value that is calculated with respect to the entire region. When the difference exceeds a predetermined limit, the image reader is judged to have image noise.

The image noise measurement method enables univocal detection of generation of image noise and the generation position, though analysis of image data obtained as a result of reading the constant-density read region of the test chart.

In a method of measuring image noise of an image reader according to still another embodiment of the present invention, an image reader is caused to read a test chart having a read region of constant density so as to collect image data, and the image data are analyzed in order to obtain a difference between an average value that is calculated at a certain position along a longitudinal direction or a transverse direction and an average value that is calculated in similar fashion at an adjacent position. When the difference exceeds a predetermined limit, the image reader is judged to have image noise.

The image noise measurement method enables univocal detection of generation of image noise and the generation position, though analysis of image data obtained as a result of reading the constant-density read region of the test chart.

In a method of measuring resolution of an image reader according to still another embodiment of the present invention, the state in which the contrast becomes low due to imbalance between the size of a pattern and the size of a single CCD element is distinguished from the state in which the contrast becomes low due to positional deviation between the pattern and the CCD element.

A method of measuring resolution of an image reader according to still another embodiment of the present invention uses a test chart such that positions of patterns in a document image deviate from theoretical positions upon being formed on a CCD element, so that coincidence periodically occurs between white patterns and corresponding reading pixels, and coincidence periodically occurs between black patterns and corresponding reading pixels. This test chart is used, and a region that is sufficiently large to include a location where coincidence occurs between patterns and pixels is read. Subsequently, a gradation difference is calculated for each pixel of the read image over the entirety of the region, and the maximum gradation difference is detected. When the maximum gradation difference exceeds a value for defective/non-defective judgment, the image reader is judged to have passed a resolution test.

When the present resolution measurement method is employed, the contrast between adjacent pixels in the read region changes at a constant period. Therefore, even when the test chart is placed on the image reader without consideration of its position, there always appears a location where patterns coincide with pixels. Therefore, the simple operation of checking the highest contrast enables distinguishing the state in which the contrast becomes low due to imbalance between the size of the pattern and the pixel size of the CCD element caused by fuzziness or other cause.

BRIEF DESCRIPTION OF THE DRAWINGS

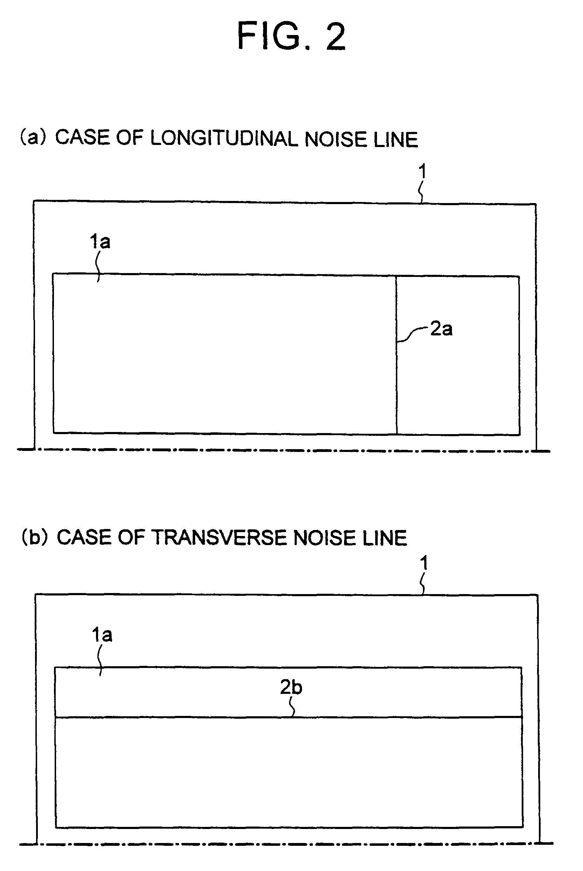

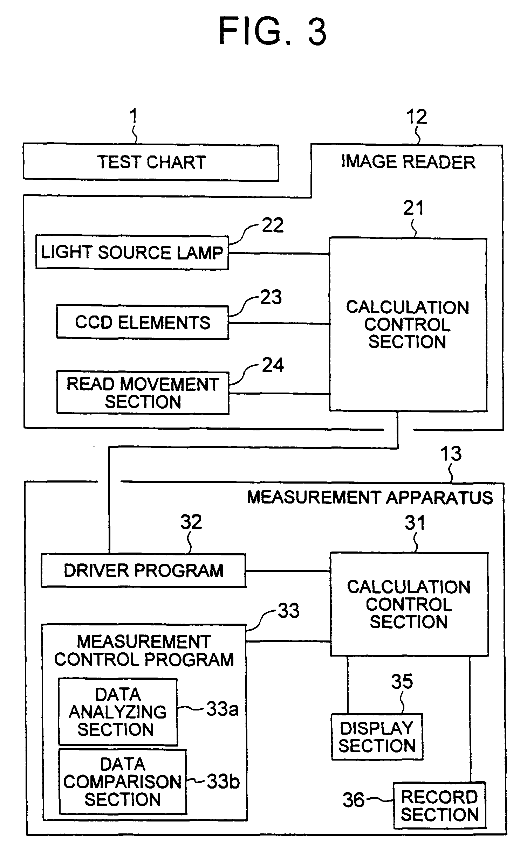

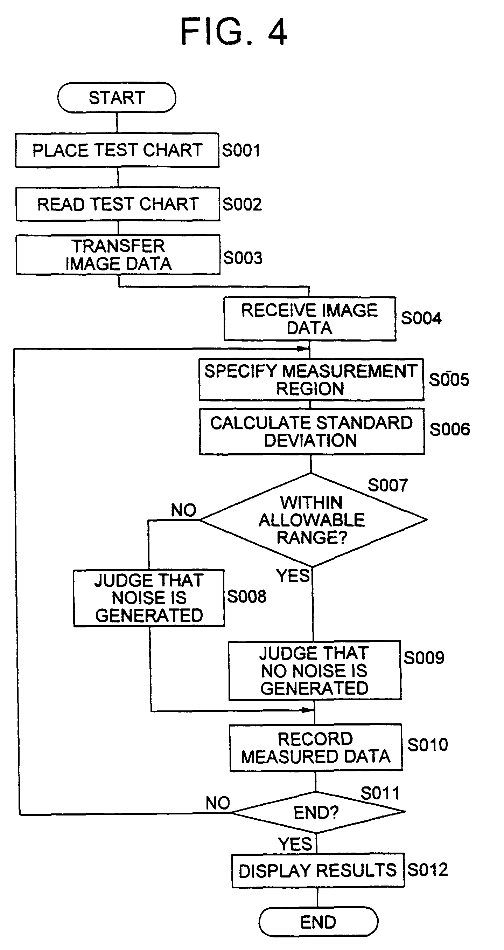

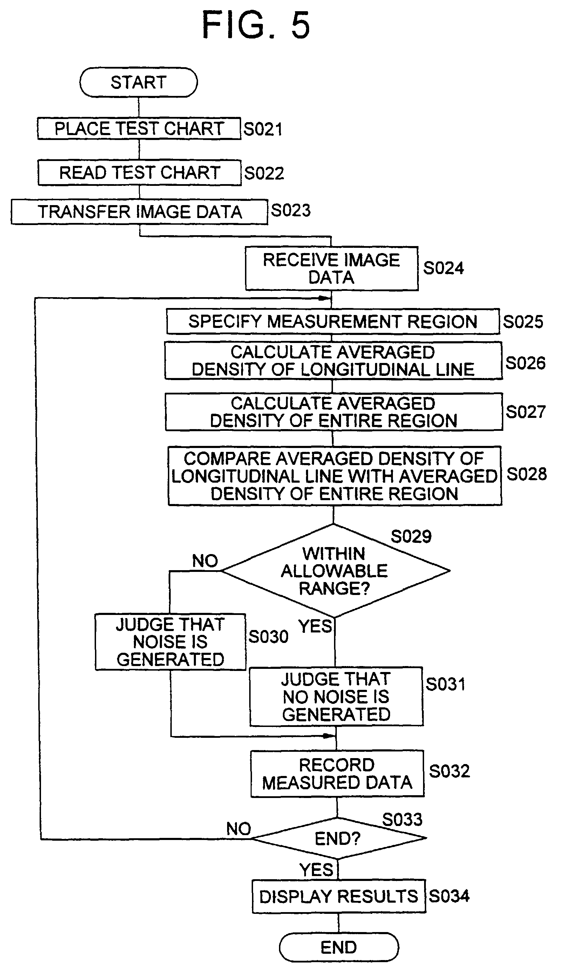

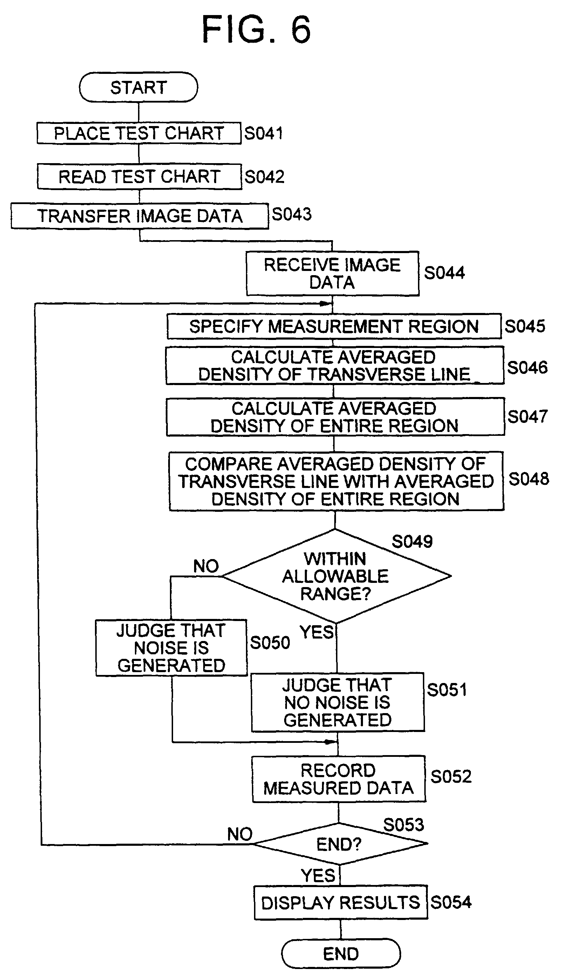

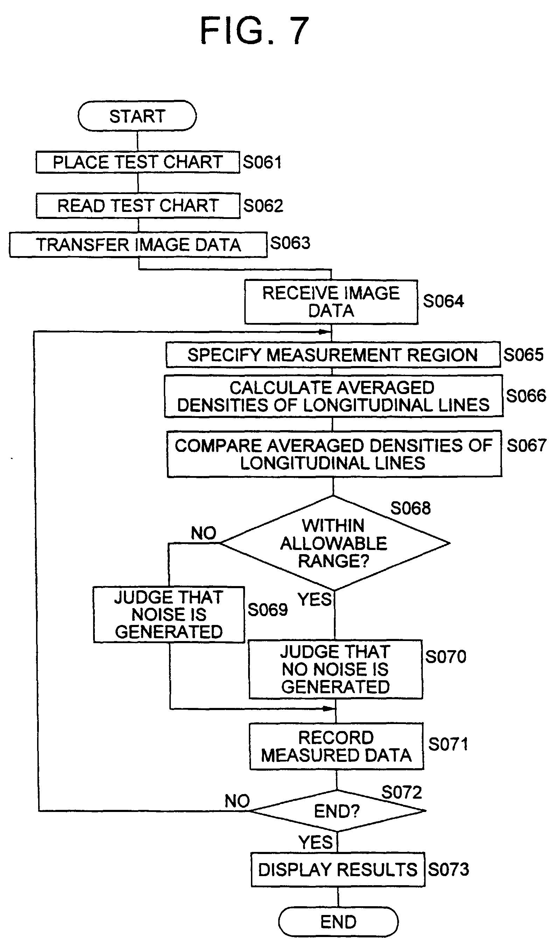

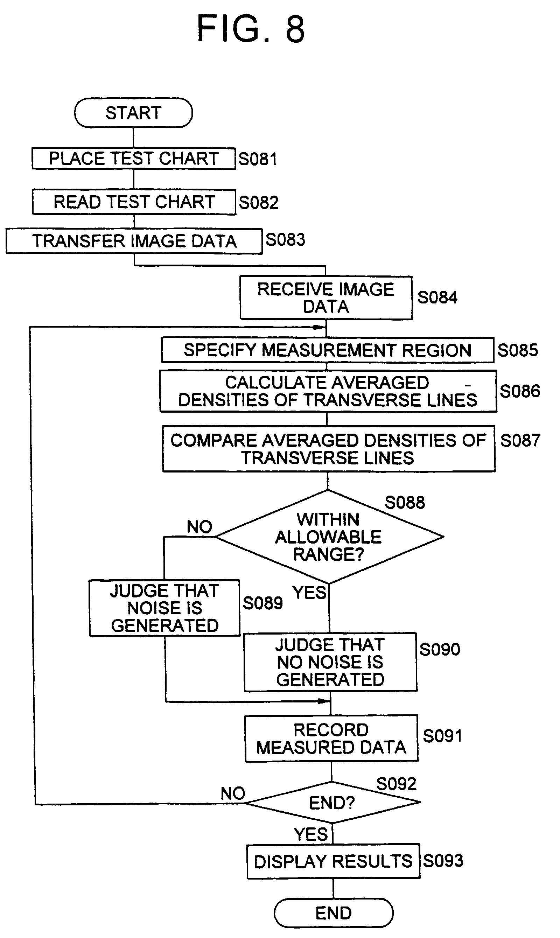

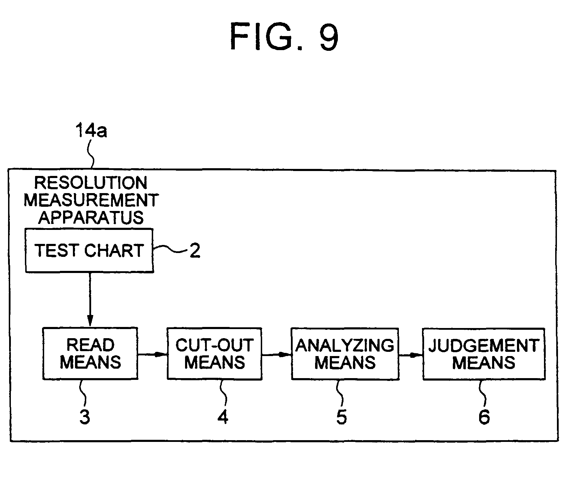

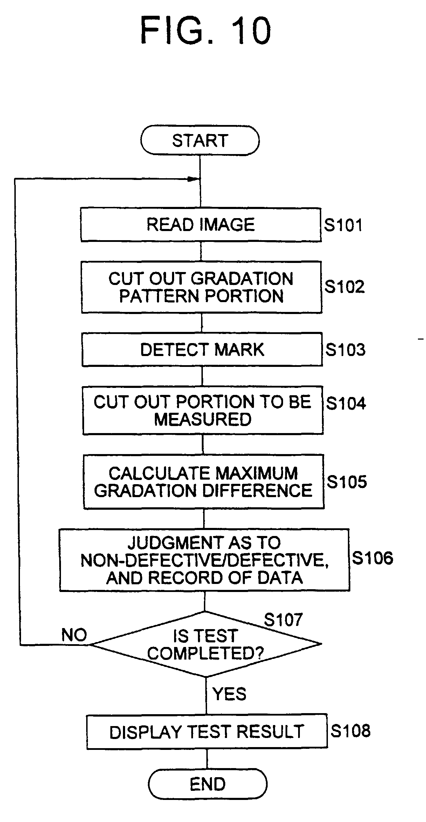

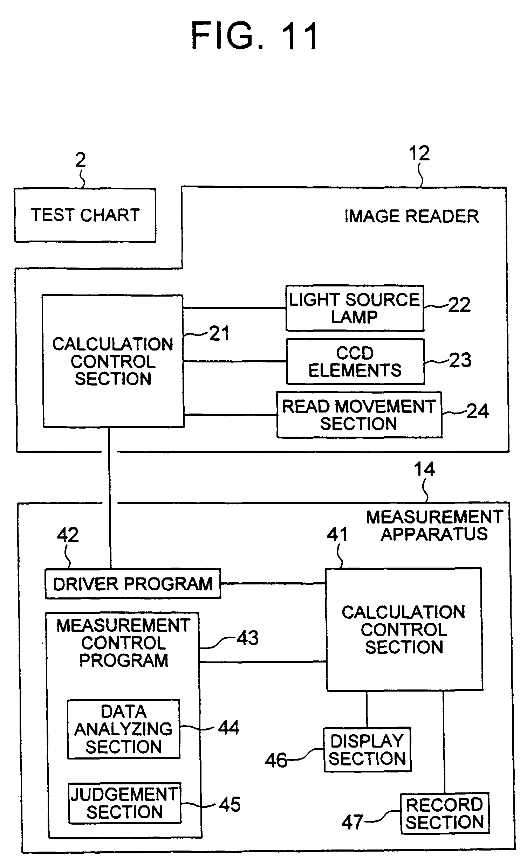

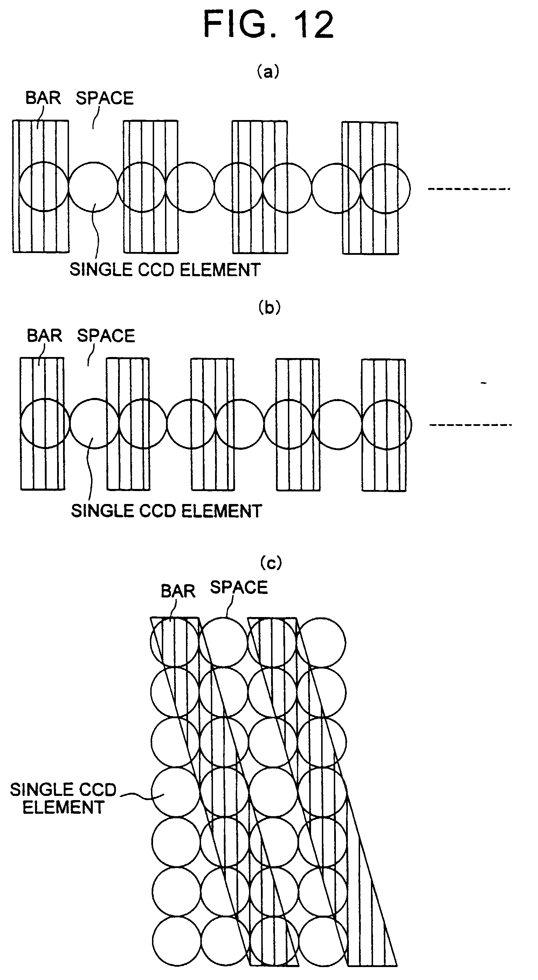

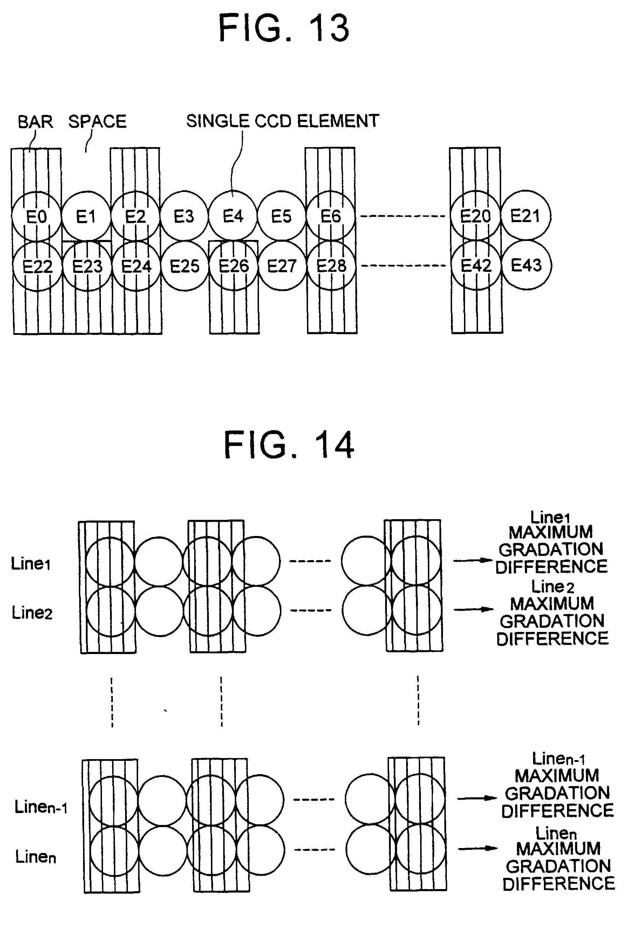

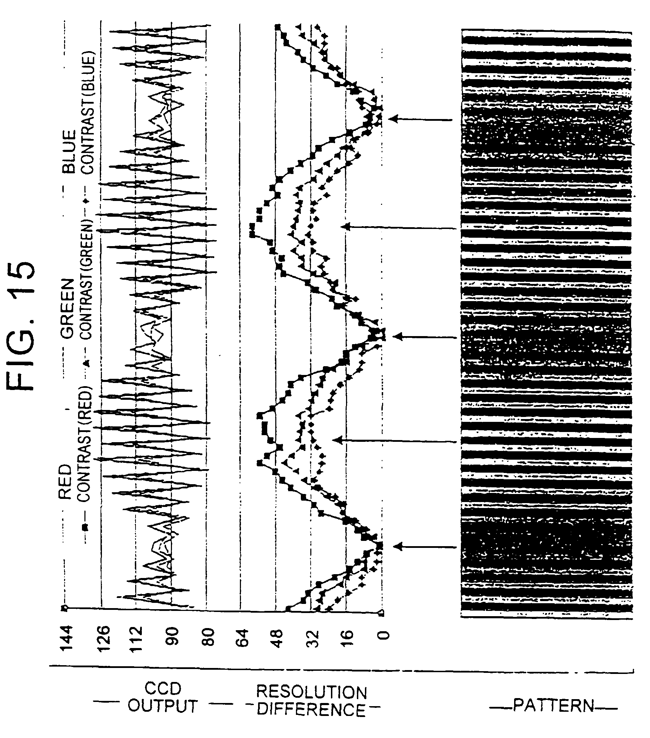

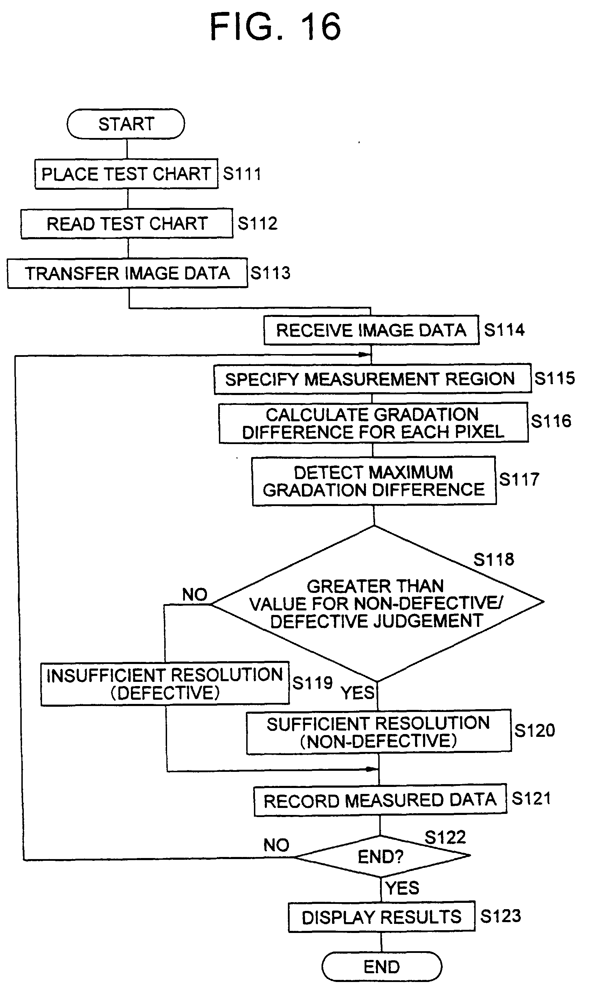

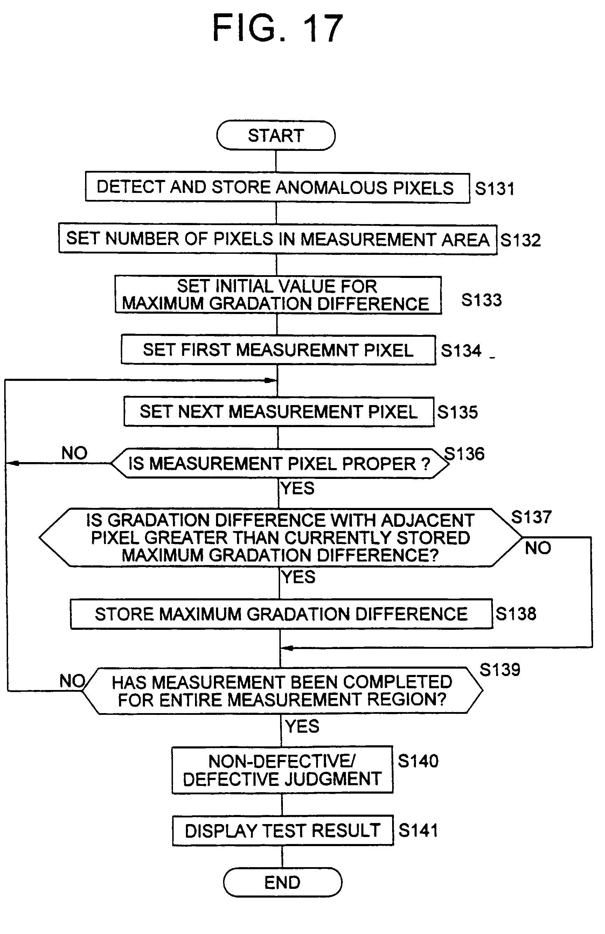

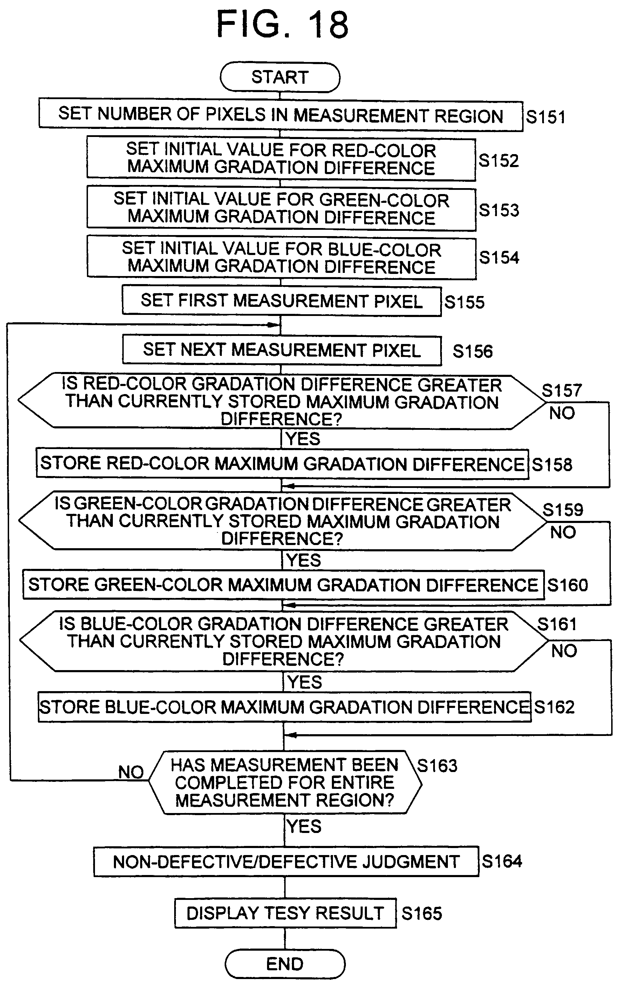

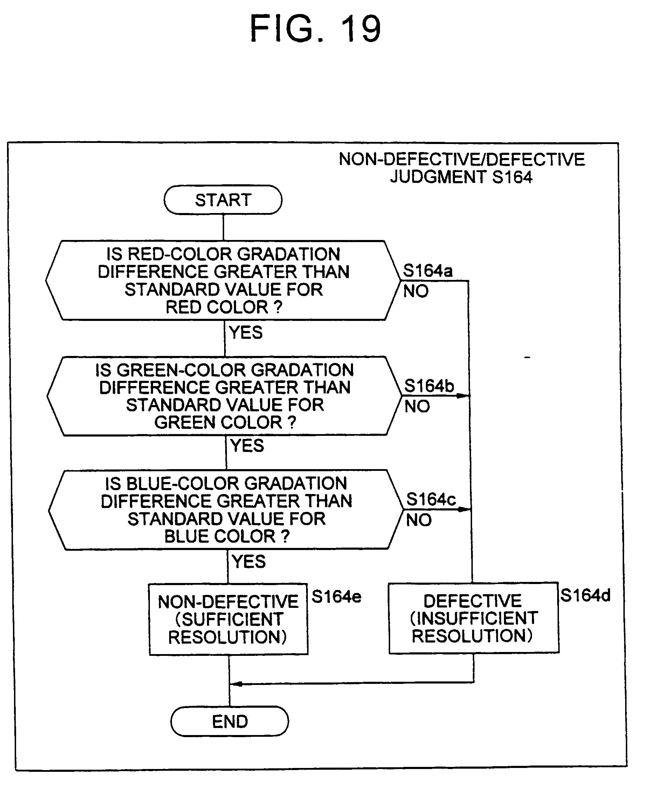

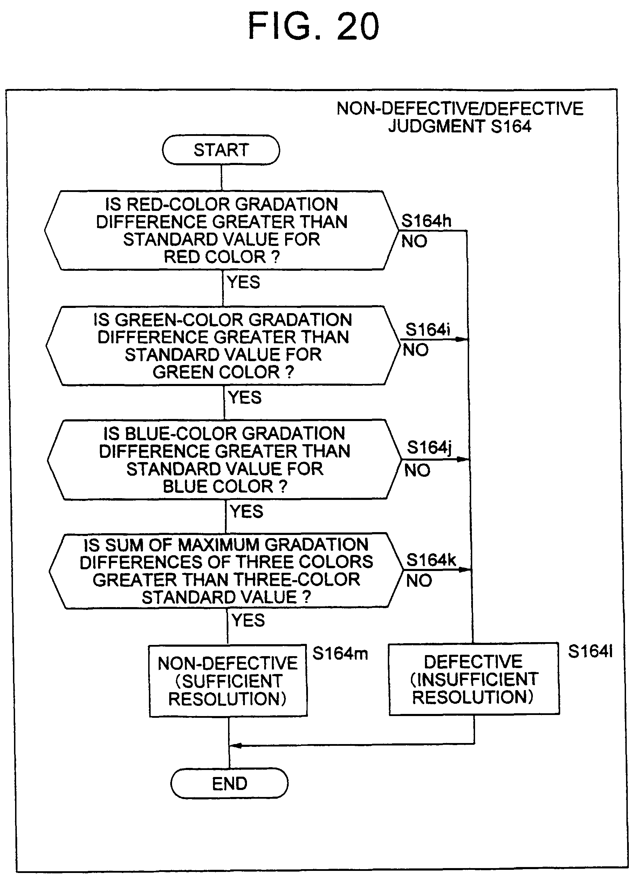

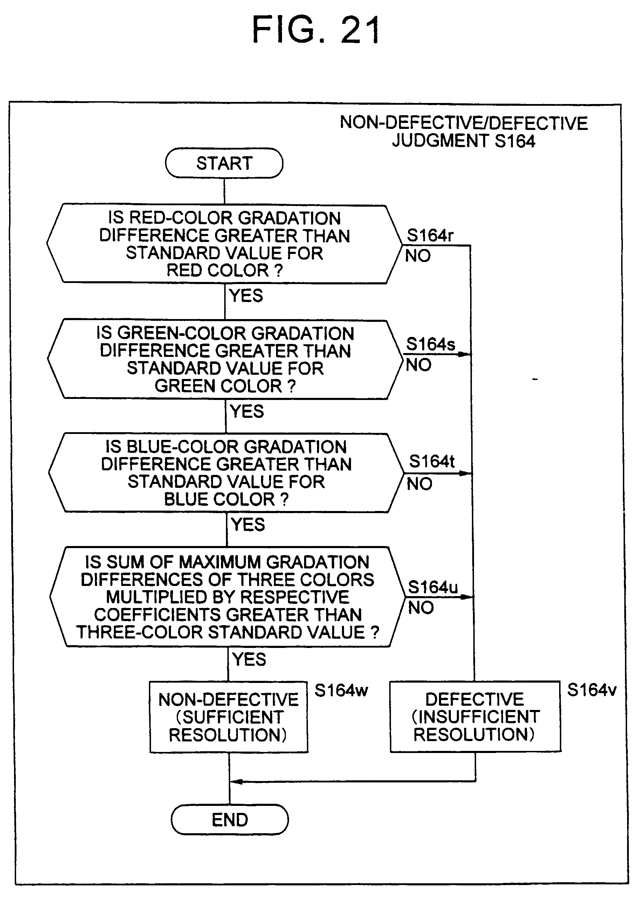

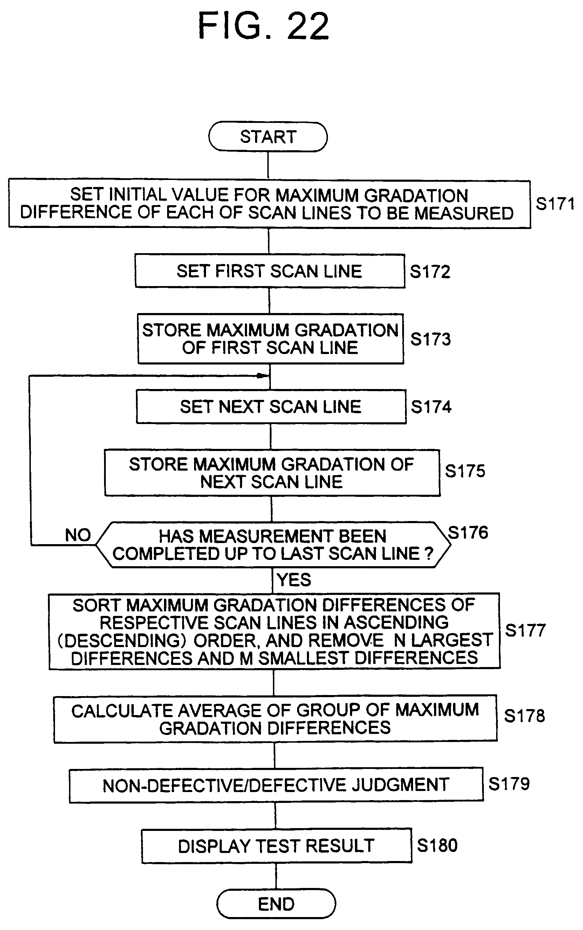

FIGS. 1(a) and 1(b) are explanatory diagrams each showing a test chart according to an embodiment of the present invention. FIGS. 2(a) and 2(b) are explanatory diagrams relating to the present invention and each showing the direction of a noise line. FIG. 3 is a block diagram according to the present invention. FIG. 4 is a flowchart according to a representative embodiment of the present invention. FIG. 5 is a flowchart according to another representative embodiment of the present invention. FIG. 6 is a flowchart according to another representative embodiment of the present invention. FIG. 7 is a flowchart according to another representative embodiment of the present invention. FIG. 8 is a flowchart according to another representative embodiment of the present invention. FIG. 9 is a diagram showing another constitution of the present invention. FIG. 10 is a general flowchart according to the present invention. FIG. 11 shows a diagram showing the structure of an embodiment of the present invention. FIGS. 12(a)-12(c) are explanatory illustration in relation to the embodiment of the present invention. FIG. 13 is another explanatory illustration in relation to the embodiment of the present invention. FIG. 14 is still another explanatory illustration in relation to the embodiment of the present invention. FIG. 15 is still another explanatory illustration in relation to the embodiment of the present invention. FIG. 16 is a flowchart according to another embodiment of the present invention. FIG. 17 is a flowchart according to another embodiment of the present invention. FIG. 18 is a flowchart according to another embodiment of the present invention. FIG. 19 is a flowchart according to another embodiment of the present invention. FIG. 20 is a flowchart according to another embodiment of the present invention. FIG. 21 is a flowchart according to another embodiment of the present invention. FIG. 22 is a flowchart according to another embodiment of the present invention. FIG. 23 is a graph showing the relationship between image density of an original document and CCD output. FIGS. 24(a) and 24(b) are explanatory views showing an read image in the case where a CCD element corresponding to a single pixel is abnormal. FIG. 25 is a block diagram of a noise measurement system according to a conventional technique. FIG. 26 is a flowchart of a noise measurement according to the conventional technique. FIG. 27 is a diagram showing a constitution according to a conventional technique. FIG. 28 is a flowchart according to the conventional technique. FIG. 29(a) and 29(b) are test charts for a resolution test according to the conventional technique. FIGS. 30(a), 30(b), and 30(c) are illustrations relating to the conventional technique and each showing the relationship between the size of an image and the size of a CCD light receipt portion.

BEST MODE FOR CARRYING OUT THE INVENTION

(First Mode)

A representative mode of the present invention will be described with reference to FIGS. 1-8. In order to solve the above-described problems, methods of measuring image noise of an image reader according to representative embodiments of the present invention are as follows.

In a method of measuring image noise of an image reader, the image reader is caused to read a single read region of constant density or a plurality of read regions of different constant densities; a standard deviation of optical density of all pixels within the read region is calculated; and when the standard deviation falls outside a predetermined numerical range, image noise is judged to have been detected in the image reader.

The above-described feature enables setting of a univocal reference for detection of image noise by the image noise measurement method.

In another method of measuring image noise of an image reader, the image reader is caused to read a single read region of constant density or a plurality of read regions of different constant densities; an average density along each longitudinal line: i.e., an average of values output from a certain CCD element upon scanning along a sub-scan direction in the read region is calculated; when the difference between an average density along a certain longitudinal line and an average density along a neighboring longitudinal line or the difference between an average density along a certain longitudinal line and an average density of the entirety of the measurement region falls outside a predetermined numerical range, the certain longitudinal line is judged to be a noise line, and image noise is judged to have been detected in the image reader.

In still another method of measuring image noise of an image reader, the image reader is caused to read a single read region of constant density or a plurality of read regions of different constant densities; an average density along each transverse line; i.e., an average of values output from CCD elements upon scanning along a main-scan direction within the read region is calculated; and when the difference between an average density along a certain transverse line and an average density along a neighboring transverse line or the difference between an average density along a certain transverse line and an average density of the entirety of the measurement region falls outside a predetermined numerical range, the transverse line is judged to be a noise line, and image noise is judged to have been detected in the image reader.

In still another method of measuring image noise of an image reader, the image reader is caused to read a single read region of constant density or a plurality of read regions of different constant densities; an average density along each longitudinal line; i.e., an average of values output from a certain CCD element upon scanning along a sub-scan direction within the read region is calculated; and when the difference between an average density along a certain longitudinal line and an average density along an adjacent longitudinal line falls outside a predetermined numerical range, the certain longitudinal line is judged to be a noise line, and image noise is judged to have been detected in the image reader.

In still another method of measuring image noise of an image reader, the image reader is caused to read a single read region of constant density or a plurality of read regions of different constant densities; an average density along each transverse line; i.e., an average of values output from CCD elements upon scanning along a main-scan direction in the read region is calculated; and when the difference between an average density along a certain transverse line and an average density along an adjacent transverse line falls outside a predetermined numerical range, the transverse line is judged to be a noise line, and image noise is judged to have been detected in the image reader.

The above-described feature enables setting of a univocal reference for detection of image noise by the image noise measurement method as well as a univocal reference for specifying the position where the image noise is generated.

A recording medium stores a program which is used for a measurement apparatus in order to measure image noise of an image reader connected to a host apparatus and adapted to provide image data to the holt apparatus. The program carries out the step of causing the image reader to read a single read region of constant density or a plurality of read regions of different constant densities and calculating a standard deviation of optical density of all pixels within the read region; and the step of reporting detection of image noise in the image reader, when the standard deviation falls outside a predetermined numerical range.

Alternatively, the recording medium stores a program for carrying out the step of causing the image reader to read a single read region of constant density or a plurality of read regions of different constant densities and calculating an average density with respect to each longitudinal line; i.e., an average of values output from a certain CCD element upon scanning along a sub-scan direction in the read region; and the step of judging a certain longitudinal line to be a noise line and reporting detection of image noise in the image reader, when the difference between an average density along the certain longitudinal line and an average density along a neighboring longitudinal line or the difference between an average density along the certain longitudinal line and an average density of the entirety of the measurement region falls outside a predetermined numerical range.

Alternatively, the recording medium stores a program for carrying out the step of causing the image reader to read a single read region of constant density or a plurality of read regions of different constant densities and calculating an average density with respect to each transverse line; i.e., an average of values output from a certain CCD element upon scanning along a main-scan direction in the read region; and the step of judging a certain transverse line to be a noise line and reporting detection of image noise in the image reader, when the difference between an average density along the certain transverse line and an average density along a neighboring transverse line or the difference between an average density along the certain transverse line and an average density of the entirety of the measurement region falls outside a predetermined numerical range.

Alternatively, the recording medium stores a program for carrying out the step of causing the image reader to read a single read region of constant density or a plurality of read regions of different constant densities and calculating an average density with respect to each longitudinal line; i.e., an average of values output from a certain CCD element upon scanning along a sub-scan direction in the read region; and the step of judging a certain longitudinal line to be a noise line and reporting detection of image noise in the image reader, when the difference between an average density along the certain longitudinal line and an average density along an adjacent longitudinal line falls outside a predetermined numerical range.

Alternatively, the recording medium stores a program for carrying out the step of causing the image reader to read a single read region of constant density or a plurality of read regions of different constant densities and calculating an average density with respect to each transverse line; i.e., an average of values output from a certain CCD element upon scanning along a main-scan direction in the read region; and the step of judging a certain transverse line to be a noise line and reporting detection of image noise in the image reader, when the difference between an average density along the certain transverse line and an average density along an adjacent transverse line falls outside a predetermined numerical range.

By virtue of the above features, the measurement apparatus for testing the image reader can be equipped with the step of detecting image noise and the step of specifying the position where the image noise is generated.

In the present specification, the term "main-scan direction" refers to a major direction along which a scanning operation for reading a document is performed. Therefore, an image data set obtained by a single main scan comprises a row of image data pieces or single-dimensional image data which represent a single transverse line. In general, the image data set along the main-scan direction—which represents a transverse line—is obtained concurrently through use of a plurality of CCD elements aligned along the main-scan direction.

The term "sub-scan direction" refers to a scan direction perpendicular to the main-scan direction. While the scan along the sub-scan direction is performed, the row of image data pieces or single-dimensional image data obtained through the scanning along the main-scan direction are accumulated, thereby obtaining a matrix of image data pieces or two-dimensional data. Accordingly, one of the plurality of CCD elements aligned along the main-scan direction generates a row of image data pieces which represents a single longitudinal line, which is parallel to the sub-scan direction.

A representative embodiment of the present invention will be described in detail with reference to FIGS. 1 to 8.

FIG. 1 shows a representative example of a test chart used in the image noise measurement method. The test chart denoted by reference numeral 1 is formed of a colorless, transparent material which enables formation of an optical image by means of transmitted light. This eliminates indeterminate factors which would otherwise be introduced due to irregular reflection generated through use of a test chart which forms an optical image by means of reflected light.

The test chart 1 has a plurality of read regions 1a, 1b, 1c, and 1d. The read regions 1a, 1b, 1c, and 1d have constant densities such that density increases stepwise from the region 1a toward the region 1d. For example, the image density of the read region 1a is zero, and the read region 1d has an image density such as to completely intercept transmission light. The read regions 1b and 1c have predetermined light transmittances between those of the read regions 1a and 1d. FIG. 1(a) shows an example of a test chart having transversely extending read regions, and FIG. 1(b) shows an example of a test chart having longitudinally extending read regions. Of course, if necessary, a test chart having constant density over the entire region may be used.

Noise lines generated upon reading of the test charts 1 will be described with reference to FIG. 2. In the case shown in FIG. 2(a) in which a longitudinal noise line 2a is observed in the read region 1a of the test chart 1 read by an image reader, a prediction is made that a certain CCD element is in an anomalous state, or that dust or the like has adhered to the certain CCD element to hinder the function thereof.

In the case shown in FIG. 2(b) in which a transverse noise line 2b is observed in the read region 1a of the test chart 1 read by an image reader, a prediction is made that fluctuation occurs in the optical system during scanning due to a malfunction of a feed mechanism for sub-scan, or that a light source lamp enters on and off states due to instability.

An embodiment of the image noise measurement method according to the present invention will be described with reference to FIGS. 3 to 8.

FIG. 3 shows a block diagram. In an image reader 12 to be tested, light emitted from a light source lamp 22 is directed to a test chart 1 placed on the image reader 12, and light that has passed through the test chart 1 is led to CCD elements 23 via an optical system, so that an optical image is formed on the CCD elements 23. The test chart 1 used here is similar to those shown in FIG. 1. A read movement section 24 moves the optical system along the sub-scan direction in order to obtain image data. A calculation control section 21 transfers image data generated in the CCD elements 23 to a measurement apparatus 13. The measurement apparatus 13 analyzes the image data received from the image reader 12, by means of a measurement control program 33 stored therein, in order to judge whether or not image noise is present. The result of judgment as to presence/absence of image noise is displayed on a display section 35 and is stored in a record section 36.

The embodiment of the image noise measurement method according to the present invention will be described with reference to the flowchart shown in FIG. 4. Reference numerals referred to in the respective processes are those shown in FIG. 3.

In step S001, an operator places the test chart 1 on the image reader 12 to be tested. In step S002, the test chart 1 is read by the image reader 12, and in step S003, the image data are transmitted to the measurement apparatus 13.

After receipt of the image data in step S004, the measurement apparatus 13 proceeds to step S005 in order to specify a subject region to be measured (by means of the measurement control program 33). For example, the read region 1a of the test chart 1 shown in FIG. 1 is designated.

In step S006, a data analyzing section 33a of the measurement control program 33 calculates an average value of density within the subject region, and then calculates a standard deviation on the basis of the average value.

In step S007, the standard deviation is compared with a predetermined value. When the difference between the standard deviation and the predetermined value is not greater than a predetermined allowable limit, processing proceeds to step S009 in order to judge that no image noise is present. When the difference between the standard deviation and the predetermined value exceeds the predetermined allowable limit, processing proceeds to step S008 in order to judge that image noise is present. In this case, the image reader 12 is passed to a predetermined section where rework is performed.

In step S010, measurement records such as the above-described standard deviation are stored in the record section 36. Subsequently, processing proceeds to step S011. When the image data of the read region 1b of the test chart 1 shown in FIG. 1 is to be measured, processing returns to step S005. When the image data analysis has been completed for all the regions of the test chart to be measured, in step S012, results of the measurement are displayed on the display section 35 in order to notify the operator of the results. Subsequently, the measuring process is ended.

Accordingly, the process flow for image noise measurement shown in FIG. 4 enables univocal judgment as to presence/absence of image noise, without reliance on the operator's visual check, and further enables storage and reproduction of measured data when necessary.

Another embodiment of the image noise measurement method according to the present invention will be described with reference to the flowchart shown in FIG. 5. Reference numerals referred to in the respective processes are those shown in FIG. 3.

In step S021, an operator places the test chart 1 on the image reader 12 to be tested. In step S022, the test chart 1 is read by the image reader 12, and in step S023, the image data are transmitted to the measurement apparatus 13.

After receipt of the image data in step S024, the measurement apparatus 13 proceeds to step S025 in order to specify a subject region to be measured. For example, the read region 1a of the test chart 1 shown in FIG. 1 is designated.

In step S026, the data analyzing section 33a of the measurement control program 33 calculates the average of densities represented by image data which relate to a certain longitudinal line and which are output from a certain CCD element within the subject region. In subsequent step S027, the average of densities represented by all the image data corresponding to the entire subject region is calculated.

In step S028, the average density calculated in step S026 is compared with the average density over the entire subject region calculated in step S027 to thereby calculate the difference therebetween.

Alternatively, the average density calculated in step S026 is compared with the average of densities represented by image data which relate to another longitudinal line and which are output from another CCD element which is separated from the certain CCD element by a distance corresponding to a predetermined number of CCD elements.

When it is judged in step S029 that the difference obtained in step S028 is not greater than a predetermined allowable limit, processing proceeds to step S031 in order to judge that no image noise is present. When the difference exceeds the predetermined allowable limit, processing proceeds to step S030 in order to judge that image noise is present. In this case, the image reader 12 is passed to a predetermined section where rework is performed.

In step S032, measurement records such as the position of the longitudinal line where the malfunction of the CCD element has been found are stored in the record section 36. Subsequently, processing proceeds to step S033. When the image data of the read region 1b of the test chart 1 shown in FIG. 1 is to be measured, processing returns to step S025. When the image data analysis has been completed for all the regions of the test chart to be measured, in step S034, results of the measurement are displayed on the display section 35 in order to notify the operator of the results. Subsequently, the measuring process is ended.

Accordingly, the process flow for image noise measurement shown in FIG. 5 enables univocal judgment as to presence/absence of image noise as well as the position of a CCD element taking part in generation of the image noise, without reliance on the operator's visual check, and further enables storage and reproduction of measured data when necessary.

Still another embodiment of the image noise measurement method according to the present invention will be described with reference to the flowchart shown in FIG. 6. Reference numerals referred to in the respective processes are those shown in FIG. 3.

In step S041, an operator places the test chart 1 on the image reader 12 to be tested. In step S042, the test chart 1 is read by the image reader 12, and in step S043, the image data are transmitted to the measurement apparatus 13.

After receipt of the image data in step S044, the measurement apparatus 13 proceeds to step S045 in order to specify a subject region to be measured. For example, the read region 1a of the test chart 1 shown in FIG. 1 is designated.

In step S046, the data analyzing section 33a of the measurement control program 33 calculates the average of densities represented by image data which relate to a certain transverse line extending along the main-scan direction within the subject region. In subsequent step S027, the average of densities represented by all the image data corresponding to the entire subject region is calculated.

In step S048, the average density along a transverse line calculated in step S046 is compared with the average density over the entire subject region calculated in step S047 to thereby calculate the difference therebetween.

Alternatively, the average density calculated in step S046 is compared with the average of densities represented by image data which relate to another transverse line which extends along the main-scan direction and is separated from the certain transverse line by a distance corresponding to a predetermined number of transverse lines.

When it is judged in step S049 that the difference obtained in step S048 is not greater than a predetermined allowable limit, processing proceeds to step S051 in order to judge that no image noise is present. When the difference exceeds the predetermined allowable limit, processing proceeds to step S050 in order to judge that image noise is present. In this case, the image reader 12 is passed to a predetermined section where rework is performed.

In step S052, measurement records such as the position of the transverse line where the malfunction has been found are stored in the record section 36. Subsequently, processing proceeds to step S053. When the image data of the read region 1b of the test chart 1 shown in FIG. 1 is to be measured, processing returns to step S045. When the image data analysis has been completed for all the regions of the test chart to be measured, in step S054, results of the measurement are displayed on the display section 35 in order to notify the operator of the results. Subsequently, the measuring process is ended.

Accordingly, the process flow for image noise measurement shown in FIG. 6 enables univocal judgment as to presence/absence of image noise as well as the position along the sub-scan direction where any image noise was generated, without reliance on operator's visual check, and further enables storage and reproduction of measured data when necessary.

Another embodiment of the image noise measurement method according to the present invention will be described with reference to the flowchart shown in FIG. 7. Reference numerals referred to in the respective processes are those shown in FIG. 3.

In step S061, an operator places the test chart 1 on the image reader 12 to be tested. In step S062, the test chart 1 is read by the image reader 12, and in step S063, the image data are transmitted to the measurement apparatus 13.

After receipt of the image data in step S064, the measurement apparatus 13 proceeds to step S065 in order to specify a subject region to be measured. For example, the read region 1a of the test chart 1 shown in FIG. 1 is designated.

In step S066, the data analyzing section 33a of the measurement control program 33 calculates the average of densities represented by image data which relate to a certain longitudinal line and which are output from a certain CCD element within the subject region.

In step S067, the average density calculated in step S066 is compared with the average of densities represented by image data which relate to an adjacent longitudinal line and which are output from another CCD element which is adjacent to the certain CCD element.

When it is judged in step S068 that the difference obtained in step S067 is not greater than a predetermined allowable limit, processing proceeds to step S070 in order to judge that no image noise is present. When the difference exceeds the predetermined allowable limit, processing proceeds to step S069 in order to judge that image noise is present. In this case, the image reader 12 is passed to a predetermined section where rework is performed.

In step S071, measurement records such as the position of the longitudinal line where the malfunction of the CCD element has been found are stored in the record section 36. Subsequently, processing proceeds to step S072. When the image data of the read region 1b of the test chart 1 shown in FIG. 1 is to be measured, processing returns to step S065. When the image data analysis has been completed for all the regions of the test chart to be measured, in step S073, results of the measurement are displayed on the display section 35 in order to notify the operator of the results. Subsequently, the measuring process is ended.

Accordingly, the process flow for image noise measurement shown in FIG. 7 enables univocal judgment as to presence/absence of image noise as well as the position of a CCD element taking part in generation of the image noise, without reliance on the operator's visual check, and further enables storage and reproduction of measured data when necessary.

Still another embodiment of the image noise measurement method according to the present invention will be described with reference to the flowchart shown in FIG. 8. Reference numerals referred to in the respective processes are those shown in FIG. 3.

In step S081, an operator places the test chart 1 on the image reader 12 to be tested. In step S082, the test chart 1 is read by the image reader 12, and in step S083, the image data are transmitted to the measurement apparatus 13.

After receipt of the image data in step S084, the measurement apparatus 13 proceeds to step S085 in order to specify a subject region to be measured. For example, the read region 1a of the test chart 1 shown in FIG. 1 is designated.

In step S086, the data analyzing section 33a of the measurement control program 33 calculates the average of densities represented by image data which relate to a certain transverse line extending along the main-scan direction within the subject region.

In step S087, the average density calculated in step S086 is compared with the average of densities represented by image data which relate to another transverse line which extends along the main-scan direction and which is adjacent to the certain transverse line.

When it is judged in step S088 that the difference obtained in step S087 is not greater than a predetermined allowable limit, processing proceeds to step S090 in order to judge that no image noise is present. When the difference exceeds the predetermined allowable limit, processing proceeds to step S089 in order to judge that image noise is present. In this case, the image reader 12 is passed to a predetermined section where rework is performed.

In step S091, measurement records such as the position of the transverse line where the malfunction has been found are stored in the record section 36. Subsequently, processing proceeds to step S092. When the image data of the read region 1b of the test chart 1 shown in FIG. 1 is to be measured, processing returns to step S085. When the image data analysis has been completed for all the regions of the test chart to be measured, in step S093, results of the measurement are displayed on the display section 35 in order to notify the operator of the results. Subsequently, the measuring process is ended.

Accordingly, the process flow for image noise measurement shown in FIG. 8 enables univocal judgment as to presence/absence of image noise as well as the position along the sub-scan direction where any image noise was generated, without reliance on operator's visual check, and further enables storage and reproduction of measured data when necessary.

According to the above-described mode of the present invention, the following effects can be obtained.

An image reader is caused to read a single read region of constant density or a plurality of read regions of different constant densities; a standard deviation of optical density of all pixels within the read region is calculated; and when the standard deviation falls outside a predetermined numerical range, image noise is judged to have been detected in the image reader.

By virtue of the above feature, it becomes possible to provide the image noise measuring method with a standardized calculation method for detecting image noise and a univocal reference for judgement. Therefore, reliable measurement of image noise can be performed without reliance on operator's visual check.

An image reader is caused to read a single read region of constant density or a plurality of read regions of different constant densities; an average density along each longitudinal line; i.e., an average of values output from a certain CCD element upon scanning along a sub-scan direction in the read region is calculated; when the difference between an average density along a certain longitudinal line and an average density along a neighboring longitudinal line or the difference between an average density along a certain longitudinal line and an average density of the entirety of the measurement region falls outside a predetermined numerical range, the certain longitudinal line is judged to be a noise line, and image noise is judged to have been detected in the image reader.

Alternatively, an image reader is caused to read a single read region of constant density or a plurality of read regions of different constant densities; an average density along each transverse line; i.e., an average of values output from CCD elements upon scanning along a main-scan direction within the read region is calculated; and when the difference between an average density along a certain transverse line and an average density along a neighboring transverse line or the difference between an average density along a certain transverse line and an average density of the entirety of the measurement region falls outside a predetermined numerical range, the transverse line is judged to be a noise line, and image noise is judged to have been detected in the image reader.

Alternatively, an image reader is caused to read a single read region of constant density or a plurality of read regions of different constant densities; an average density along each longitudinal line; i.e., an average of values output from a certain CCD element upon scanning along a sub-scan direction within the read region is calculated; and when the difference between an average density along a certain longitudinal line and an average density along an adjacent longitudinal line falls outside a predetermined numerical range, the certain longitudinal line is judged to be a noise line, and image noise is judged to have been detected in the image reader.

Alternatively, an image reader is caused to read a single read region of constant density or a plurality of read regions of different constant densities; an average density along each transverse line; i.e., an average of values output from CCD elements upon scanning along a main-scan direction in the read region is calculated; and when the difference between an average density along a certain transverse line and an average density along an adjacent transverse line falls outside a predetermined numerical range, the transverse line is judged to be a noise line, and image noise is judged to have been detected in the image reader.

By virtue of the above feature, it becomes possible to provide the image noise measuring method with a standardized calculation procedure for detecting image noise, a univocal reference for judgement, and a univocal reference for specifying the position where the image noise is generated. Therefore, reliable measurement of image noise can be performed without reliance on operator's visual check.

A recording medium stores a program which is used for a measurement apparatus in order to measure image noise of an image reader connected to a host apparatus and adapted to provide image data to the holt apparatus. The program carries out the step of causing the image reader to read a single read region of constant density or a plurality of read regions of different constant densities and calculating a standard deviation of optical density of all pixels within the read region; and the step of reporting detection of image noise in the image reader, when the standard deviation falls outside a predetermined numerical range.

Alternatively, the recording medium stores a program for carrying out the step of causing the image reader to read a single read region of constant density or a plurality of read regions of different constant densities and calculating an average density with respect to each longitudinal line; i.e., an average of values output from a certain CCD element upon scanning along a sub-scan direction in the read region; and the step of judging a certain longitudinal line to be a noise line and reporting detection of image noise in the image reader, when the difference between an average density along the certain longitudinal line and an average density along a neighboring longitudinal line or the difference between an average density along the certain longitudinal line and an average density of the entirety of the measurement region falls outside a predetermined numerical range.

Alternatively, the recording medium stores a program for carrying out the step of causing the image reader to read a single read region of constant density or a plurality of read regions of different constant densities and calculating an average density with respect to each transverse line; i.e., an average of values output from a certain CCD element upon scanning along a main-scan direction in the read region; and the step of judging a certain transverse line to be a noise line and reporting detection of image noise in the image reader, when the difference between an average density along the certain transverse line and an average density along a neighboring transverse line or the difference between an average density along the certain transverse line and an average density of the entirety of the measurement region falls outside a predetermined numerical range.

Alternatively, the recording medium stores a program for carrying out the step of causing the image reader to read a single read region of constant density or a plurality of read regions of different constant densities and calculating an average density with respect to each longitudinal line; i.e., an average of values output from a certain CCD element upon scanning along a sub-scan direction in the read region; and the step of judging a certain longitudinal line to be a noise line and reporting detection of image noise in the image reader, when the difference between an average density along the certain longitudinal line and an average density along an adjacent longitudinal line falls outside a predetermined numerical range.

Alternatively, the recording medium stores a program for carrying out the step of causing the image reader to read a single read region of constant density or a plurality of read regions of different constant densities and calculating an average density with respect to each transverse line; i.e., an average of values output from a certain CCD element upon scanning along a main-scan direction in the read region; and the step of judging a certain transverse line to be a noise line and reporting detection of image noise in the image reader, when the difference between an average density along the certain transverse line and an average density along an adjacent transverse line falls outside a predetermined numerical range.

By virtue of the above features, the measurement apparatus for testing the image reader can comprises the step for detecting image noise and the step for specifying the position where the image noise is generated. Therefore, no limitation is imposed on the apparatus for carrying out the process for measuring image noise, and the process becomes a universal operation.

(Second Mode)

Another representative mode of the present invention will be described with reference to FIGS. 9-22. In order to solve the above-described problems, a method and apparatus for measuring the resolution of an image reader according to the present mode of the present invention have the following features.

As shown in FIG. 9, which shows another constitution of the present invention, an apparatus 14a for measuring the resolution of an image reader according to the present invention uses a test chart 2. White/black line pair patterns are formed on the test chart 2 at a pitch slightly different from the read pixel pitch of the image reader. Alternatively, white/black line pair patterns are formed on the test chart 2 in a slightly inclined manner. Along the main-scan direction or the sub-scan direction, coincidence periodically occurs, during a resolution test, between white patterns and corresponding reading pixels and between black patterns and corresponding reading pixels. The apparatus comprises read unit (or means) 3, cut-out unit (or means) 4, analyzing unit (or means) 5, and judgment unit (or means) 6. The read means 3 reads the test chart 2 over a transversely extending region or a longitudinally extending region which is large enough to include a location where coincidence occurs between patterns and pixels. The cut-out means 4 cuts out a necessary portion of an image read by the read means 3. The analyzing means 5 calculates a gradation difference for each pixel of the read image over the entirety of the cut-out region, and detects the maximum gradation difference. When the maximum gradation difference exceeds a value for defective/non-defective judgment, the judgment means 6 judges that the image reader has passed a resolution test.

As shown in FIG. 10, which illustrates the general flowchart of the present invention, the resolution measurement apparatus 14a performs resolution measurement in accordance with the following steps. In step S101, the read means 3 reads the entire region of the test chart 2. In step S102, the cut-out means 4 cuts out from the read image an image portion containing a resolution pattern, along with a margin. In step S103, the cut-out means 4 detects a mark representing a region of the resolution pattern and, in step S104, the cut-out means 4 cuts out a subject portion to be measured. In step S105, the analyzing means 5 calculates a gradation difference for each pixel of the read image over the entirety of the cut-out subject region, and detects the maximum gradation difference. In step S106, the judgment means 6 judges whether the maximum gradation difference exceeds a value for defective/non-defective judgment, and data representing the result of the judgment are recorded. In step S107, a check is made as to whether the test is to be ended. When the test is to be ended, in step S108, the test result is displayed; i.e., "OK" for the case of non-defective and "NG" for the case of defective.

In one method of measuring the resolution of an image reader according to the present invention, white/black line pair patterns are formed on the test chart 2 at a pitch slightly different from the read pixel pitch of the image reader, so that along the main-scan direction, coincidence periodically occurs between white patterns and corresponding reading pixels and between black patterns and corresponding reading pixels. The test chart 2 is read over a transversely extending region which is large enough to include a location where coincidence occurs between patterns and pixels. A gradation difference for each pixel of the read image over the entirety of the region is calculated, and the maximum gradation difference is detected. When the maximum gradation difference exceeds a value for defective/non-defective judgment, that the image reader is judged to have passed a resolution test.

In another method of measuring the resolution of art image reader according to the present invention, white/black line pair patterns are formed on the test chart 2 in a slightly inclined manner, so that along the sub-scan direction, coincidence periodically occurs between white patterns and corresponding reading pixels and between black patterns and corresponding reading pixels. The test chart 2 is read over a longitudinally extending region which is large enough to include a location where coincidence occurs between patterns and pixels. A gradation difference for each pixel of the read image over the entirety of the region is calculated, and the maximum gradation difference is detected. When the maximum gradation difference exceeds a value for defective/non-defective judgment, that the image reader is judged to have passed a resolution test.

In the method of measuring the resolution of an image reader according to the present invention, the detection of the maximum gradation difference is performed under conditions that the differences between a candidate maximum gradation difference and the gradation differences at points before and after the point where the candidate maximum gradation difference has been detected exceed a predetermined value and assume opposite signs.

In the method of measuring the color image resolution of an image reader according to the present invention, judgement is made by use of such a criteria that the maximum gradation difference of each color is equal to or greater than a corresponding constant standard value.

In the method of measuring the color image resolution of an image reader according to the present invention, judgement is made by use of such a criteria that the maximum gradation difference of each color is equal to or greater than a corresponding constant standard value; and the sum of the maximum gradation differences of the respective colors is equal to or greater than a predetermined value which is not less than the sum of the standard values of the respective colors.

In the method of measuring the resolution of an color image of an image reader according to the present invention, when the sum of the maximum gradation differences of the respective colors is calculated, the maximum gradation differences are multiplied by coefficients for the respective colors in consideration of the fact that the effects of the respective colors on the resolution differ from one another.

In general, green has the greatest effect in increasing the resolution. Therefore, the coefficients for the respective colors are set such that the coefficient for the green-color component becomes the largest, the coefficient for the red-color component becomes the second largest, and the coefficient for the blue-color component becomes the smallest.

In the method of measuring the resolution of an image reader according to the present invention, white/black line pair patterns are scanned a plurality of times while the scanning position is changed; a maximum gradation difference is calculated for each scan; from n maximum gradation differences, the N largest maximum gradation differences and the M smallest maximum gradation differences are removed to thereby obtain P maximum gradation differences; and judgment is made on the basis of the average of the P maximum gradation differences.

A recording medium according to the present invention stores a computer readable program for performing the method of measuring the resolution of the image reader. That is, the program performs the step of reading a test chart on which are formed white/black line pair patterns such that, during a resolution test, coincidence periodically occurs between white patterns and corresponding reading pixels and between black patterns and corresponding reading pixels, wherein the reading operation is performed over a region which is large enough to include a location where coincidence occurs between patterns and pixels; the step of cutting out a necessary portion of an image, calculating a gradation difference for each pixel of the read image over the entirety of the cut-out region, and detecting the maximum gradation difference; and the step of judging that the image reader has passed a resolution test, when the maximum gradation difference exceeds a value for defective/non-defective judgment.

The program may be stored in any of various types of recording mediums such as a floppy disk or a compact disk.

The above-described mode provides the following action.

When, through use of the above-described test chart 2, the width of the bars and the width of the spaces are made different from the size of the light receiving portion of the CCD in the main-scan direction, or the bars and spaces are slightly inclined in the main-scan direction, the contrast between adjacent pixels in the region varies at a constant period along the main-scan direction or the sub-scan direction. Further, a variation in the position of the test chart 2 appears in the form of a horizontal shift of the waveform and does not affect the period or amplitude of the waveform. Accordingly, the above-described state in which the balance between the size of a pattern and the size of a single CCD element is poor due to fuzziness or other cause and in which the contrast becomes low can be recognized independently through measurement of the highest contrast without consideration of the position of the test chart 2.

As described above, a "visible" range is defined numerically on the basis of the contrast of an image. Further, use of the test chart 2 —which facilitates an operation of setting the test chart 2 onto an image reader to be tested— enables an automated, computerized resolution test for judging whether a CCD element corresponding to a single pixel can resolve a single bar.

Further, the detection of the maximum gradation difference is performed under conditions that the differences between the candidate maximum gradation difference and the gradation differences at points before and after the point where the candidate maximum gradation difference has been detected exceed a predetermined value and assume opposite signs. Therefore, influence of dust, staining, or the like on the test chart 2 during resolution measurement can be eliminated.

In addition, since judgement is made by use of such a criteria that the maximum gradation difference of each color is equal to or greater than a corresponding constant standard value, the measurement of the resolution of color images is enabled.

Moreover, a predetermined number of maximum gradation differences are selected from the group of maximum gradation differences obtained through a scanning operation in which white/black line pair patterns are scanned a plurality of times while the scanning position is changed; and the average of the predetermined number of maximum gradation differences is used for judgement. Therefore, measurement accuracy can be increased.

Further, the above-described method can be realized through use of a program for operating a computer. Since the program is stored in any of various types of recording mediums such as a floppy disk or a compact disk, the program can be installed into an arbitrary processing apparatus in order to perform required processing when the processing is needed.

A representative embodiment of the present invention will be described in detail with reference to FIGS. 11-22.

FIG. 11 is a constitutional diagram of the embodiment of the invention. In order to perform an image reader resolution test, a test chart 2 shown in FIG. 12, which will be described later, an image reader 12 to be tested, and a measurement apparatus 14 are used in combination.

In accordance with instructions from the measurement apparatus 14, the calculation control section 21 of the image reader 12 (read means 3) controls the operations of a light source lamp 22, CCD elements 23, and a read movement section 24, and transmits to the measurement apparatus 14 image data obtained as a result of reading the test chart 2.

The measurement apparatus 14 is controlled by a calculation control section 41 in order to exchange data with the image reader 12 via a driver program 42. The measurement control program 43 processes received image data in accordance with an instruction from the calculation control section 41. The display section 46 displays data representing results of the resolution test. The memory section 47 stores the data representing results of the resolution test.

The measurement control program 43 comprises a data analyzing section 44 and a judgment section 45. The measurement control program 43 (cut-out means 4) cuts out a necessary portion of an image read by the image reader 12. The data analyzing section 44 (analyzing means 5) calculates a gradation difference for each pixel of the read image over the entirety of the cut-out region, and detects the maximum gradation difference. The judgment section 45 (judgment means 6) compares the maximum gradation difference with various preset values for non-defective/defective judgment required for the resolution test. When the maximum gradation difference exceeds a value for non-defective/defective judgment, the judgment section 45 judges that the image reader has passed the resolution test. When the maximum gradation difference is not greater than the value for non-defective/defective judgment, the judgment section 45 judges that the image reader has failed the resolution test.

FIGS. 12(a)-12(c) are explanatory illustrations for the embodiment of the present invention, and each shows a main portion of the test chart 2. The test chart 2 shown in FIG. 12(a) has a large number of black bars and a large number of white bars or spaces, which form white/black line pair patterns. The patterns are disposed at a pitch slightly greater than the pitch of a plurality of CCD elements aligned along the main-scan direction. For example, both of black bars and spaces interposed therebetween are set at a width of 12 μm, although a width of 11 μm is required for testing a resolution of 2400 dpi. A few hundreds of bars and spaces are disposed.

The test chart 2 shown in FIG. 12(b) has a large number of black bars and a large number of white bars or spaces, which form white/black line pair patterns. The patterns are disposed at a pitch slightly smaller than the pitch of a plurality of CCD elements aligned along the main-scan direction. For example, both of black bars and spaces interposed therebetween are set at a width of 10 μm, although the width of 11 μm is required for testing a resolution of 2400 dpi. A few hundreds of bars and spaces are disposed.

In the test charts 2 shown in FIGS. 12(a) and 12(b), patterns are formed at a pitch slightly different from the pitch of the CCD elements of the image reader. The patterns of the test charts 2 have a positional relationship with the CCD elements such that coincidence periodically occurs between a certain white pattern and a certain CCD element and between a certain black pattern and a certain CCD element along the main-scan direction.

The test chart 2 shown in FIG. 12(c) has a large number of black bars and a large number of white bars or spaces, which form white/black line pair patterns. The patterns are disposed at a pitch equal to the pitch of a plurality of CCD elements aligned along the main-scan direction. Further, the white/black line pair patterns are formed to be slightly inclined with respect to the sub-scan direction. A few hundreds of bars and spaces are disposed.

The patterns of the test chart 2 shown in FIG. 12(c) have a positional relationship with the CCD elements such that coincidence periodically occurs between a certain white pattern and a certain CCD element and between a certain black pattern and a certain CCD element along the sub-scan direction.

FIG. 15 is an explanatory illustration for the embodiment of the present invention. FIG. 15 shows the procedures according to which a color image reader 13 to be tested is caused to read patterns formed on the test chart 2 and the measurement apparatus 14 is caused to measure the resolution of the image reader 13.

The portion labeled "CCD OUTPUT" represents an output of a single CCD element upon reading a single line of patterns of the test chart 2. The portion labeled "GRADATION DIFFERENCE" represents the difference in gradation between adjacent CCD elements. That is, the larger the difference, the more clearly the pattern can be seen. The portion labeled "PATTERN" represents a pattern image obtained as a result of reading the patterns formed on the test chart 2.

As shown in FIG. 15, when the patterns of the test chart 2 shown in FIG. 12 are read, the contrast (difference in gradation) between adjacent CCD elements produced in the read region changes at a constant period along the main-scan direction or the sub-scan direction. A variation in the position of the test chart 2 appears in the form of a horizontal shift of the waveform and does not affect the period or amplitude of the waveform. Accordingly, the above-described state in which the balance between the size of a pattern and the size of a single CCD element is poor due to fuzziness or other cause and in which the contrast becomes low can be recognized independently through measurement of the highest contrast without consideration of the position of the test chart 2.

As described above, a "visible" range is defined numerically on the basis of the contrast of an image. Further, use of the test chart 2 —which facilitates an operation of setting the test chart 2 onto an image reader to be tested— enables an automated, computerized resolution test for judging whether a CCD element corresponding to a single pixel can resolve a single bar.

FIG. 16 is a flowchart of the embodiment of the present invention. The steps of the resolution measurement method will be generally described with reference to FIG. 16. The same reference numerals as those shown in FIG. 11 will be used.

In step S111, an operator places the test chart 2 at a predetermined position on the image reader 12 to be tested. In step S112, the image reader 12 drives the light source lamp 22, the CCD element 23, and the read movement section 24 in order to read the entire region of the test chart 2.

In step S113, image data obtained as a result of reading the test chart 2 are transmitted to the measurement apparatus 14.

In step 114, the measurement apparatus 14 receives the image data. In step S115, the measurement control program 43 cuts out from the resolution pattern a subject portion to be measured.

In step 116, the data analyzing section 44 of the measurement control program 43 calculates a gradation difference for each pixel of the read image over the entirety of the cut-out region, and, in step S117, the data analyzing section 44 detects the maximum gradation difference.

In step S118, the judgment section 45 of the measurement control program 43 compares the maximum gradation difference and a preset value for defective/non-defective judgment in order to judge whether the maximum gradation difference exceeds the preset value.

When the maximum gradation difference does not exceed a value for defective/non-defective judgment, in step S119, the image reader 12 is judged not to have a required resolution contained in the basic specifications and therefore be defective. By contrast, when the maximum gradation difference exceeds the value for defective/non-defective judgment, in step S120, the image reader 12 is judged to have the required resolution contained in the basic specifications and therefore be non-defective.

In step S121, data indicating measurement results are stored in the memory section 47, and in step S122, a check is made as to whether the resolution test is to be ended. When the test is to be ended, in step S123, the test result is displayed on the display section. Subsequently, the resolution measurement process is ended. When the test is to be continued, processing returns to step S115.

The details of the steps of the resolution measurement performed by the measurement apparatus 14 will next be described.

FIG. 17 is a flowchart of the embodiment of the present invention, showing the processing steps of the measurement control program 43 for measurement of resolution with respect to monochrome images.

In step S131, the subject portion cut from the resolution pattern area is checked for an anomalous pixel. When an anomalous pixel is detected, the pixel is memorized. Specifically, as shown in FIG. 13, the gradation data are checked for each of the CCD elements. When a certain CCD element which should have read a black pattern has not read the black pattern, or when a certain CCD element which should have read a white pattern has not read the white pattern, the element number of the CCD element is memorized. In the example shown in FIG. 13, the element numbers of CCD elements E3, E4, and E5, or the element numbers of CCD elements E22, E23, and E25 are memorized. This indicates that at portions corresponding to the CCD elements E3, E4, and E5, or the CCD elements, E22, E23, and E24, the patterns formed on the test chart 2 are broken due to dust, staining, or the like. Accordingly, during resolution measurement, the above-described portions are omitted.

In step S132, a number of pixels in a measurement region corresponding to the subject portion cut from the resolution pattern area is set to a pixel number counter. In the case of the measurement region as shown in FIG. 13, 43 is set to the pixel number counter.

In step S133, an initial value for the maximum gradation difference is set and stored.

In step S134, a value designating a first measurement pixel; i.e.. E0 shown in FIG. 13, is set to the counter.

In step S135, a value designating a next measurement pixel; i.e., E1 shown in FIG. 13, is set to the counter.

In step S136, judgment is made as to the measurement pixel is a proper pixel. That is, the pixels memorized in step S131 are anomalous, and the remaining pixels are judged to be proper. In the case of a proper pixel, processing proceeds to step S137. In the case of an anomalous pixel, processing returns to step S135.

In step S137, the difference in gradation between the current pixel and the adjacent pixel that has been previously measured is calculated, and judgment is made as to whether the thus-calculated difference exceeds the maximum gradation difference currently stored. When the difference exceeds the maximum gradation difference currently stored, processing proceeds to step S138. When the difference is not greater than the maximum gradation difference currently stored, processing proceeds to step S139.

The above-described judgment is performed according to the following expression:

$$abs(E_n - E_{n-1}) \geq Max_{Diff}$$

where $E_n$ represents a gradation of a measurement pixel, $E_{n-1}$ represents a gradation of an adjacent measurement pixel previously measured, and $Max_{Diff}$ represents the maximum gradation difference presently stored.

In step S138, the maximum gradation difference is stored.

In step S139, judgment is made as to whether the measurement has been repeated a number of times corresponding to the previously set number of pixels in the measurement region. That is, judgment is made as to whether the number of pixels set in the counter has been reached. When all the pixels in the measurement region have been measured, processing proceeds to step S140. When not all the pixels in the measurement region have been measured, processing returns to step S135.

In step S140, the stored maximum gradation difference is compared with a preset value for defective/non-defective judgment in order to judge whether the maximum gradation difference exceeds the preset value. In step S141, the test result is displayed on the display section. Subsequently, the test process is ended.

The processing in steps S131 and S136 eliminates the influence of dust, staining, or the like on the test chart during resolution measurement. That is, the maximum gradation difference is updated by use of a candidate maximum gradation difference, only when the differences between the candidate maximum gradation difference and the gradation differences at points before and after the point where the candidate maximum gradation difference has been detected exceed a predetermined value and assume opposite signs.

FIG. 18 is a flowchart of the embodiment of the present invention. FIG. 18 shows the processing steps of the measurement control program 43 for measurement of resolution with respect to color images. The processing steps corresponding to the steps S131 and S136 shown in FIG. 17 are omitted.

In step S151, a number of pixels in a measurement region corresponding to the subject portion cut from the resolution pattern area is set to a pixel number counter. In the case of the measurement region as shown in FIG. 13, 43 is set to the pixel number counter.

In step S152, an initial value for the maximum gradation difference with respect red color is set and stored. In step S153, an initial value for the maximum gradation difference with respect green color is set and stored. In step S154, an initial value for the maximum gradation difference with respect blue color is set and stored.

In step S155, a value designating a first measurement pixel; i.e., E0 shown in FIG. 13, is set to the counter. Each CCD element provides data representing three gradation values; i.e., a red-color gradation, a green-color gradation, and a blue color gradation.

In step S156, a value designating a next measurement pixel; i.e., E1 shown in FIG. 13, is set to the counter.

In step S157, the difference in red-color gradation between the current pixel and the adjacent pixel that has been previously measured is calculated, and judgement is made whether the thus-calculated difference is greater than the red-color maximum gradation difference currently stored. When the difference is greater than the red-color maximum gradation difference currently stored, processing proceeds to step S158. When the difference is smaller than the red-color maximum gradation difference currently stored, processing proceeds to step S159.

The above-described judgement is performed according to the following expression:

$$abs(R_n - R_{n-1}) \geq Diff_{Rmax}$$

where $R_n$ represents a red-color gradation of a measurement pixel, $R_{n-1}$ represents a red-color gradation of an adjacent measurement pixel previously measured, and $Diff_{Rmax}$ represents the red-color maximum gradation difference presently stored.

In step S158, the red-color maximum gradation difference is stored.

In step S159, the difference in green-color gradation between the current pixel and the adjacent pixel that has been previously measured is calculated, and judgement is made whether the thus-calculated difference is greater than the green-color maximum gradation difference currently stored. When the difference is greater than the green-color maximum gradation difference currently stored, processing proceeds to step S160. When the difference is smaller than the green-color maximum gradation difference currently stored, processing proceeds to step S161.

The above-described judgement is performed according to the following expression:

$$abs(G_n - G_{n-1}) \geq Diff_{Gmax}$$

where $G_n$ represents a green-color gradation of a measurement pixel. $G_{n-1}$ represents a green-color gradation of an adjacent measurement pixel previously measured, and $Diff_{Gmax}$ represents the green-color maximum gradation difference presently stored.

In step S160, the green-color maximum gradation difference is stored.

In step S161, the difference in blue-color gradation between the current pixel and the adjacent pixel that has been previously measured is calculated, and judgement is made whether the thus-calculated difference is greater than the blue-color maximum gradation difference currently stored. When the difference is greater than the blue-color maximum gradation difference currently stored, processing proceeds to step S162. When the difference is smaller than the blue-color maximum gradation difference currently stored, processing proceeds to step S163.

The above-described judgement is performed according to the following expression:

$$abs(B_n - B_{n-1}) \geq Diff_{Bmax}$$

where $B_n$ represents a blue-color gradation of a measurement pixel, $B_{n-1}$ represents a blue-color gradation of an adjacent measurement pixel previously measured, and $Diff_{Bmax}$ represents the blue-color maximum gradation difference presently stored.

In step S162, the blue-color maximum gradation difference is stored.

In step S163, judgement is made whether the measurement has been repeated a number of times corresponding to the previously set number of pixels in the measurement region. That is, judgment is made whether the number of pixels set in the counter has been reached. When all the pixel in the measurement region have been measured, processing proceeds to step S164. When all the pixel in the measurement region have not been measured, processing returns to step S156.

In step S164, the stored maximum gradation difference is compared with a preset value for defective/non-defective judgement in order to judge whether the maximum gradation difference exceeds the preset value. In step S165, the test result is displayed on the display section. Subsequently, the test process is ended.

The details of the step S164 will be described later. The process corresponding to steps S131 and S136 shown in FIG. 17 are performed such that anomalous pixels are detected before the step S151 and judgement as to whether each measurement pixel is proper is performed between steps S156 and S157.

Next, the details of the step S164 is described.

FIG. 19 is a flowchart of the embodiment of the invention. In the processing shown in FIG. 19, judgement is made on the basis of a criteria that the maximum gradation difference with respect to each color of a color image is equal to or greater than a corresponding constant standard value.

In step S164a, judgement is made whether the red-color maximum gradation difference is greater than the red-color standard value. Then the red-color maximum gradation difference is greater than the red-color standard value, processing proceeds to step S164b. When the red-color maximum gradation difference is smaller than the red-color standard value, processing proceeds to step S164d.

The above-described judgement is performed according to the following expression:

$$Diff_{Rmax} \geq Rtol$$

where $Diff_{Rmax}$ represents the red-color maximum gradation difference, and Rtol represents the red-color standard value.

In step S164b, judgement is made whether the green-color maximum gradation difference is greater than the green-color standard value. When the green-color maximum gradation difference is greater than the green-color standard value, processing proceeds to step S164c. When the green-color maximum gradation difference is smaller than the green-color standard value, processing proceeds to step S164d.

The above-described judgement is performed according to the following expression:

$$Diff_{Gmax} \geq Gtol$$

where $Diff_{Gmax}$ represents the green-color maximum gradation difference, and Gtol represents the green-color standard value.

In step S164c, judgement is made whether the blue-color maximum gradation difference is greater than the blue-color standard value. When the blue-color maximum gradation difference is greater than the blue-color standard value, processing proceeds to step S164e. When the blue-color maximum gradation difference is smaller than the blue-color standard value, processing proceeds to step S164d.

The above-described judgement is performed according to the following expression:

$$Diff_{Bmax} \geq Btol$$

where $Diff_{Bmax}$ represents the blue-color maximum gradation difference, and Btol represents the blue-color standard value.

In step S164d, the image reader is judged not to have a required resolution and therefore be defective. In step S164e, the image reader is judged to have the required resolution and therefore be non-defective. Subsequently, the processing is ended.

FIG. 20 is a flowchart of the embodiment of the invention. In the processing shown in FIG. 20, judgement is made on the basis of a criteria that the maximum gradation difference with respect to each color of a color image is equal to or greater than a constant standard value corresponding to the color, and the sum of the maximum gradation differences of the three colors is equal to or greater than a three-color total standard value.

In step S164h, judgement is made whether the red-color maximum gradation difference is greater than the red-color standard value. When the red-color maximum gradation difference is greater than the red-color standard value, processing proceeds to step S164i. When the red-color maximum gradation difference is smaller than the red-color standard value, processing proceeds to step S164l.

In step S164i, judgement is made whether the green-color maximum gradation difference is greater than the green-color standard value. When the green-color maximum gradation difference is greater than the green-color standard value, processing proceeds to step S164j. When the green-color maximum gradation difference is smaller than the green-color standard value, processing proceeds to step S164l.

In step S164j, judgement is made whether the blue-color maximum gradation difference is greater than the blue-color standard value. When the blue-color maximum gradation difference is greater than the blue-color standard value, processing proceeds to step S164k. When the blue-color maximum gradation difference is smaller than the blue-color standard value, processing proceeds to step S164l.

The expressions which are used in steps S146h, S146i, and S164j in order to judge whether the maximum gradation differences of the respective colors are greater than the corresponding standard values are the same as those used in steps S146a, S146b, and S164c of FIG. 19, and therefore their descriptions will be omitted.

In step S164k, judgement is made whether the sum of the maximum gradation differences of the three colors (red, green, and blue) is equal to or greater than a three-color total standard value. When the three-color maximum gradation difference is greater than the three-color total standard value, processing proceeds to step S164m. When the three-color maximum gradation difference is smaller than the three-color total standard value, processing proceeds to step S164l.

The above-described judgement is performed according to the following expression:

$$\text{Diff}_{Rmax} + \text{Diff}_{Gmax} + \text{Diff}_{Bmax} \geq \text{RGBtol}$$

where $\text{Diff}_{Rmax}$ represents the red-color maximum gradation difference, $\text{Diff}_{Gmax}$ represents the green-color maximum gradation difference, $\text{Diff}_{Bmax}$ represents the blue-color maximum gradation difference, and RGBtol represents the three-color total standard value.

In step S164l, the image reader is judged not to have a required resolution and therefore be defective. In step S164m, the image reader is judged to have the required resolution and therefore be non-defective. Subsequently, the processing is ended.

FIG. 21 is a flowchart of the embodiment of the invention. In the processing shown in FIG. 21, when the sum of the maximum gradation differences of the three colors of a color image is calculated, the maximum gradation difference of each color is multiplied by a corresponding coefficient.

In step S164r, judgement is made whether the red-color maximum gradation difference is greater than the red-color standard value. When the red-color maximum gradation difference is greater than the red-color standard value, processing proceeds to step S164s. When the red-color maximum gradation difference is smaller than the red-color standard value, processing proceeds to step S164v.

In step S164s, judgement is made whether the green-color maximum gradation difference is greater than the green-color standard value. When the green-color maximum gradation difference is greater than the green-color standard value, processing proceeds to step S164t. When the green-color maximum gradation difference is smaller than the green-color standard value, processing proceeds to step S164v.

In step S164t, judgement is made whether the blue-color maximum gradation difference is greater than the blue-color standard value. When the blue-color maximum gradation difference is greater than the blue-color standard value, processing proceeds to step S164u. When the blue-color maximum gradation difference is smaller than the blue-color standard value, processing proceeds to step S164v.

The expressions which are used in steps S146r, S146s, and S164t in order to judge whether the maximum gradation differences of the respective colors are greater than the corresponding standard values are the same as those used in steps S146a, S146b, and S164c of FIG. 19, and therefore their descriptions will be omitted.

In step S164u, judgement is made whether the sum of the maximum gradation differences of the three colors (red, green, and blue) multiplied by coefficients set for respective colors is equal to or greater than a three-color total standard value. When the three-color maximum gradation difference is greater than the three-color total standard value, processing proceeds to step S164w. When the three-color maximum gradation difference is smaller than the three-color total standard value, processing proceeds to step S164v.

The above-described judgement is performed according to the following expression:

$$\text{Diff}_{Rmax} \times k_R + \text{Diff}_{Gmax} \times k_G + \text{Diff}_{Bmax} \times k_B \geq \text{RGBtol}$$

where $\text{Diff}_{Rmax}$ represents the red-color maximum gradation difference, $\text{Diff}_{Gmax}$ represents the green-color maximum gradation difference, $\text{Diff}_{Bmax}$ represents the blue-color maximum gradation difference, $k_R$ represents a coefficient for the red-color component, $k_G$ represents a coefficient for the green-color component, $k_B$ represents a coefficient for the blue-color component, and RGBtol represents the three-color total standard value.

In general, green has the greatest effect in increasing the resolution. Therefore, the coefficients for the respective colors are set such that the coefficient for the green-color component becomes the largest, the coefficient for the red-color component becomes the second largest, and the coefficient for the blue-color component becomes the smallest; e.g., the coefficient $k_G$ for the green-color component is set to 2.0, the coefficient $k_R$ for the red-color component to 1.5, and the coefficient $k_B$ for the blue-color component to 1.0.

In step S164v, the image reader is judged not to have a required resolution and therefore be defective. In step S164w, the image reader is judged to have the required resolution and therefore be non-defective. Subsequently, the processing is ended.

The processing shown in FIGS. 18 to 21 enables measurement of resolution of color images.

Next, main processing steps of another resolution measurement method will be described.

FIG. 22 is a flowchart of the embodiment of the present invention. FIG. 22 shows the processing steps of the measurement control program 43 in which white/black line pair patterns are scanned a plurality of times while the scanning position is changed; a maximum gradation difference is calculated for each scan; from the group of maximum gradation differences, the N largest maximum gradation differences and the M smallest maximum gradation differences are removed to thereby obtain P maximum gradation differences; and judgment is made on the basis of the average of the P maximum gradation differences. Those processing steps corresponding to the steps S131 and S136 shown in FIG. 17 are omitted.

In step S171, initial values for the maximum gradation differences with respect to scan lines (1-n) to be measured (shown in FIG. 14) are set and stored.

In step S172, a value designating a first scan line; i.e., Line 1 shown in FIG. 14, is set to the counter.

In step S173, the maximum gradation difference with respect to the first scan line is stored. Specifically, the difference between the gradation of a certain pixel and the gradation of an adjacent pixel previously measured are successively calculated, and judgment is made as to whether the thus-calculated difference exceeds the maximum gradation difference currently stored. When the difference exceeds the maximum gradation difference currently stored, the newly calculated difference is stored as the maximum gradation difference.

The above-described judgment is performed according to the following expression:

$$\text{abs}(E_{m,\,n} - E_{m-1,\,n}) \geq \text{Max}_{Diffn}$$

where $E_{m,\,n}$ represents a gradation of a measurement pixel, $E_{m-1,\,n}$ represents a gradation of an adjacent measurement pixel previously measured, and $\text{Max}_{Diffn}$ represents the maximum gradation difference of the scan line presently stored.

In step S174, a value designating the next scan line is set to the counter.

In step S175, the maximum gradation difference with respect to the next scan line is stored. Specifically, the difference between the gradation of a certain pixel and the gradation of an adjacent pixel previously measured are successively calculated, and judgment is made as to whether the thus-calculated difference exceeds the maximum gradation difference currently stored. When the difference exceeds the maximum gradation difference currently stored, the newly calculated difference is stored as the maximum gradation difference. The judgment is performed in accordance with the same expression as described above.

In step S176, judgment is made as to whether measurement has been completed up to the last one among the scan lines (1-n) previously set to be measured. When all the scan lines have been measured, processing proceeds to step S177. When not all the scan lines have been measured, processing returns to step S174.

In step S177, the maximum gradation differences of the respective scan lines are sorted in ascending order. Subsequently, the N largest maximum gradation differences and the M smallest maximum gradation differences are removed from the n maximum gradation differences, where $0 \leq N \leq n-1$, $0 \leq M \leq n-1$, and $0 \leq N+M \leq n-1$.

In step S178, the average of the group of maximum gradation differences is calculated and stored. The average of the group of maximum gradation differences can be obtained through division of the sum of the maximum gradation differences contained in the group by the total number of the maximum gradation differences contained in the group. That is, the average of the group of maximum gradation differences is calculated according to the following expression:

$$\mathrm{Diff_{AVC}} = \sum_{i=M+1}^{n-N} \mathrm{Max_{Diff_i}}/(n-N-M)$$

where $\mathrm{Diff_{AVC}}$ is the average of the maximum gradation differences in the group, $\Sigma\mathrm{Max_{Diffi}}$ (i is an integer between M+1 to n-N inclusive), and n-N-M is the total number of the maximum gradation differences in the group.

In step S179, the stored average of the maximum gradation differences is compared with a preset value for defective/non-defective judgment in order to judge whether the average of the maximum gradation differences exceeds the preset value. In step S180, the test result is displayed on the display section. Subsequently, the test process is ended.

Since the white/back line pair patterns are scanned a plurality of times while the scanning position is changed, the measurement accuracy can be improved.

The processing for measuring resolution of an image reader according to the present invention is performed by use of a program for operating a computer. The program may be stored in any of various types of recording mediums such as a floppy disk or a compact disk.

The above-described mode of the present invention can provide the following effects.

In the method of measuring the resolution of an image reader according to the present invention, a "visible" range is defined numerically on the basis of the contrast of an image, and a test chart which facilitates an operation of setting the test chart onto the image reader is used. Therefore, it becomes possible to realize an automated, computerized resolution test for judging whether a CCD element corresponding to a single pixel can resolve a single bar. Accordingly, an efficient production system can be established. Further, influence of dust, staining, or the like on the test chart during resolution measurement can be eliminated. Moreover, the measurement of the resolution of color images becomes possible. In addition, measurement accuracy can be improved through the scanning operation in which white/black line pair patterns are scanned a plurality of times while the scanning position is changed. Further, the method can be realized through use of a program for operating a computer. Since the program is stored in any of various types of recording mediums such as a floppy disk or a compact disk, the program can be installed into an arbitrary processing apparatus in order to perform required processing when the processing is needed.

INDUSTRIAL APPLICABILITY

In the method of measuring image noise of an image reader according to the present invention, the image reader is caused to read a test chart having a predetermined read region; and image noise is judged to have been detected when the value calculated from data obtained through the reading operation exceeds a predetermined numerical limit. Thus, it becomes possible to provide a univocal judgement reference for detection of image noise. Therefore, reliable measurement of image noise can be performed without reliance on operator's visual check. Further, in the method of measuring image noise of an image reader according to the present invention, the above-described procedures can be realized by use of a program for operating a computer. Moreover, since the program can be stored in various types of recording media, the measurement processing can be performed by use of any desired measurement apparatus.

In the method of measuring the resolution of an image reader according to the present invention, a test chart having white/black line pair patterns formed at a pitch slightly different from the read pixel pitch of the image reader is read, and when the maximum gradation difference calculated from data obtained through the reading operation exceeds a value for non-defective/defective judgement, the image reader is judged to have passed the resolution test. Thus, the resolution at which a CCD element corresponding to a single pixel can resolve a single bar can be calculated automatically. Accordingly, an efficient production system can be established. Further, influence of dust, staining, or the like on the test chart can be eliminated, and the measurement of the resolution of color images becomes possible. In addition, the method of measuring the resolution of an image reader according to the present invention can be realized by use of a program for operating a computer. Moreover, since the program can be stored in various types of recording media, the measurement processing can be performed by use of any desired measurement apparatus.

**Claims**

1.    A method of measuring image noise of an image reader connected to a host apparatus and adapted to provide image data to the holt apparatus, the method comprising:

causing the image reader to read a single read region of constant density or a plurality of read regions of different constant densities;

calculating a standard deviation of optical density of all pixels within the read region; and

judging that image noise has been detected in the image reader, when the standard deviation falls outside a predetermined numerical range.

2. A method of measuring image noise of an image reader connected to a host apparatus and adapted to provide image data to the holt apparatus, the method comprising:

causing the image reader to read a single read region of constant density or a plurality of read regions of different constant densities;

calculating an average density along each longitudinal line; i.e., an average of values output from a certain CCD element upon scanning along a sub-scan direction in the read region; and

judging a certain longitudinal line to be a noise line, and judging image noise to have been detected in the image reader, when the difference between an average density along the certain longitudinal line and an average density along a neighboring longitudinal line or the difference between an average density along the certain longitudinal line and an average density of the entirety of the read region falls outside a predetermined numerical range.

3. A method of measuring image noise of an image reader connected to a host apparatus and adapted to provide image data to the holt apparatus, the method comprising:

causing the image reader to read a single read region of constant density or a plurality of read regions of different constant densities;

calculating an average density along each transverse line; i.e., an average of values output from CCD elements upon scanning along a main-scan direction within the read region; and

judging a certain transverse line to be a noise line, and judging that image noise has been detected in the image reader, when the difference between an average density along the certain transverse line and an average density along a neighboring transverse line or the difference between an average density along the certain transverse line and an average density of the entirety of the read region falls outside a predetermined numerical range.

4. A method of measuring image noise of an image reader connected to a host apparatus and adapted to provide image data to the holt apparatus, the method comprising:

causing the image reader is caused to read a single read region of constant density or a plurality of read regions of different constant densities;

calculating an average density along each longitudinal line; i.e., an average of values output from a certain CCD element upon scanning along a sub-scan direction within the read region; and

judging a certain longitudinal line to be a noise line, and judging that image noise has been detected in the image reader, when the difference between an average density along the certain longitudinal line and an average density along an adjacent longitudinal line falls outside a predetermined numerical range,.

5. A method of measuring image noise of an image reader connected to a host apparatus and adapted to provide image data to the holt apparatus, the method comprising:

causing the image reader to read a single read region of constant density or a plurality of read regions of different constant densities;

calculating an average density along each transverse line; i.e., an average of values output from CCD elements upon scanning along a main-scan direction in the read region; and

judging a transverse line to be a noise line, and judging that image noise has been detected in the image reader, when the difference between an average density along the certain transverse line and an average density along an adjacent transverse line falls outside a predetermined numerical range.

6. A recording medium which stores a program which controls a measurement apparatus in order to measure image noise of an image reader connected to a host apparatus and adapted to provide image data to the holt apparatus, the program carrying out:

causing the image reader to read a single read region of constant density or a plurality of read regions of different constant densities and calculating a standard deviation of optical density of all pixels within the read region; and

reporting detection of image noise in the image reader, when the standard deviation falls outside a predetermined numerical range.

7. A recording medium which stores a program which controls a measurement apparatus in order to measure image noise of an image reader connected to a host apparatus and adapted to provide image data to the bolt apparatus, the program carrying out:

causing the image reader to read a single read region of constant density or a plurality of read regions of different constant densities and calculating an average density with respect to each longitudinal line; i.e., an average of values output from a certain CCD element upon scanning along a sub-scan direction in the read region; and

judging a certain longitudinal line to be a noise line and reporting detection of image noise in the image reader, when the difference between an average density along the certain longitudinal line and an average density along a neighboring longitudinal line or the difference between an average density along the certain longitudinal line and an average density of the entirety of the read region falls outside a predetermined numerical range.

8. A recording medium which stores a program which controls a measurement apparatus in order to measure image noise of an image reader connected to a host apparatus and adapted to provide image data to the holt apparatus, the program carrying out:

causing the image reader to read a single read region of constant density or a plurality of read regions of different constant densities and calculating an average density with respect to each transverse line; i.e., an average of values output from a certain CCD element upon scanning along a main-scan direction in the read region; and

judging a certain transverse line to be a noise line and reporting detection of image noise in the image reader, when the difference between an average density along the certain transverse line and an average density along a neighboring transverse line or the difference between an average density along the certain transverse line and an average density of the entirety of the read region falls outside a predetermined numerical range.

9. A recording medium which stores a program which controls a measurement apparatus in order to measure image noise of an image reader connected to a host apparatus and adapted to provide image data to the holt apparatus, the program carrying out:

causing the image reader to read a single read region of constant density or a plurality of read regions of different constant densities and calculating an average density with respect to each longitudinal line; i.e., an average of values output from a certain CCD element upon scanning along a sub-scan direction in the read region; and

judging a certain longitudinal line to be a noise line and reporting detection of image noise in the image reader, when the difference between an average density along the certain longitudinal line and an average density along an adjacent longitudinal line falls outside a predetermined numerical range.

10. A recording medium which stores a program which controls a measurement apparatus in order to measure image noise of an image reader connected to a host apparatus and adapted to provide image data to the holt apparatus, the program carrying out:

causing the image reader to read a single read region of constant density or a plurality of read regions of different constant densities and calculating an average density with respect to each transverse line; i.e., an average of values output from a certain CCD element upon scanning along a main-scan direction in the read region; and

judging a certain transverse line to be a noise line and reporting detection of image noise in the image reader, when the difference between an average density along the certain transverse line and an average density along an adjacent transverse line falls outside a predetermined numerical range.

11. An apparatus for measuring the resolution of an image reader, the apparatus comprising:

a test chart having white/black line pair patterns which are formed at a pitch slightly different from the read pixel pitch of the image reader or formed in a slightly inclined manner, so that along the main-scan direction or the sub-scan direction, coincidence periodically occurs, during a resolution test, between white patterns and corresponding reading pixels and between black patterns and corresponding reading pixels;

read unit reading the test chart over a transversely extending region or a longitudinally extending region which is large enough to include a location where coincidence occurs between patterns and pixels;

cut-out unit cutting out a necessary portion of an image read by the read means;

analyzing unit calculating a gradation difference for each pixel of the read image over the entirety of the cut-out region, and for detecting the maximum gradation difference; and

judging unit judging that the image reader has passed a resolution test when the maximum gradation difference exceeds a value for defective/non-defective judgment.

12. A method of measuring the resolution of an image reader, the method comprising

using a test chart having white/black line pair patterns formed at a pitch slightly different from the read pixel pitch of the image reader such that coincidence periodically occurs between white patterns and corresponding reading pixels and between black patterns and corresponding reading pixels;

reading the test chart over a transversely extending region which is large enough to include a location where coincidence occurs between patterns and pixels;

calculating a gradation difference for each pixel of the read image over the entirety of the region, and detecting the maximum gradation difference; and

judging that the image reader to have passed a resolution test, when the maximum gradation difference exceeds a value for defective/non-defective judgment.

13. A method of measuring the resolution of an image reader, the method comprising

using a test chart having white/black line pair patterns formed in a slightly inclined manner such that coincidence periodically occurs between white patterns and corresponding reading pixels and between black patterns and corresponding reading pixels;

reading the test chart over a longitudinally extending region which is large enough to include a location where coincidence occurs between patterns and pixels;

calculating a gradation difference for each pixel of the read image over the entirety of the region, and detecting the maximum gradation difference; and

judging that the image reader to have passed a resolution test, when the maximum gradation difference exceeds a value for defective/non-defective judgment.

14. A method of measuring the resolution of an image reader according to claim 12 or 13, wherein the detection of the maximum gradation difference is performed under conditions that the differences between a candidate maximum gradation difference and gradation differences at points before and after the point where the candidate maximum gradation difference has been detected exceed a predetermined value and assume opposite signs.

15. A method of measuring the resolution of an image reader according to claim 12 or 13, wherein judgement is made by use of such a criteria that the maximum gradation difference of each color of a color image is equal to or greater than a corresponding constant standard value.

16. A method of measuring the resolution of an image reader according to claim 15, wherein judgement is made by use of such a criteria that the maximum gradation difference of each color of the color image is equal to or greater than a corresponding constant standard value; and the sum of the maximum gradation differences of the respective colors is equal to or greater than a predetermined value which is not less than the sum of the standard values of the respective colors.

17. A method of measuring the resolution of an image reader according to claim 15, wherein when the sum of the maximum gradation differences of the respective colors of the color image, the maximum gradation differences are multiplied by coefficients for the respective colors.

18. A method of measuring the resolution of an image reader according to claim 12 or 13, wherein white/black line pair patterns are scanned a plurality of times while the scanning position is changed; a maximum gradation difference is calculated for each scan; from the group of maximum gradation differences, the N largest maximum gradation differences and the M smallest maximum gradation differences are removed to thereby obtain P maximum gradation differences; and judgment is made on the basis of the average of the P maximum gradation differences.

**19.** A recording medium which stores a program which controls a measurement apparatus in order to measure image noise of an image reader connected to a host apparatus and adapted to provide image data to the holt apparatus, the program carrying out:

reading a test chart on which are formed white/black line pair patterns such that, along the main-scan direction or the sub-scan direction, coincidence periodically occurs, during a resolution test, between white patterns and corresponding reading pixels and between black patterns and corresponding reading pixels, wherein the reading operation is performed over a region which is large enough to include a location where coincidence occurs between patterns and pixels;
cutting out a necessary portion of an image, calculating a gradation difference for each pixel of the read image over the entirety of the cut-out region, and detecting the maximum gradation difference; and
judging that the image reader has passed a resolution test, when the maximum gradation difference exceeds a value for defective/non-defective judgment.

# FIG. 1

**(a) EXAMPLE OF TRANSVERSE READ REGIONS**

1

- 1a
- 1b
- 1c
- 1d

**(b) EXAMPLE OF LONGITUDINAL READ REGIONS**

1

1a  1b  1c  1d

# FIG. 2

(a) CASE OF LONGITUDINAL NOISE LINE

1

1a

2a

(b) CASE OF TRANSVERSE NOISE LINE

1

1a

2b

# FIG. 3

```
1                                    12
┌─────────────────────┐         ┌──────────────────────────┐
│     TEST CHART      │         │      IMAGE READER        │
└─────────────────────┘         │                          │
                                │                    21    │
                                │                          │
        ┌──────22              │   ┌──────────────────┐   │
        │ LIGHT SOURCE LAMP │───┼───│                  │   │
        └───────────────────┘   │   │                  │   │
                                │   │   CALCULATION    │   │
        ┌──────23              │   │    CONTROL       │   │
        │  CCD ELEMENTS     │───┼───│    SECTION       │   │
        └───────────────────┘   │   │                  │   │
                                │   │                  │   │
        ┌──────24              │   └──────────────────┘   │
        │ READ MOVEMENT     │───┼──────────┘              │
        │   SECTION         │   └──────────────────────────┘
        └───────────────────┘
```

```
                                              13
┌──────────────────────────────────────────────────────┐
│                    MEASUREMENT APPARATUS               │
│        32                              31              │
│   ┌──────────────────┐         ┌──────────────────┐   │
│   │ DRIVER PROGRAM   │─────────│                  │   │
│   └──────────────────┘         │   CALCULATION    │   │
│                         ──33   │    CONTROL       │   │
│   ┌──────────────────┐         │    SECTION       │   │
│   │  MEASUREMENT     │─────────│                  │   │
│   │ CONTROL PROGRAM  │         └──────────────────┘   │
│   │ ┌──────────────┐ │                  │             │
│   │ │    DATA      │ │                35 │             │
│   │ │  ANALYZING   │─┼─33a     ┌────────────┐         │
│   │ │   SECTION    │ │         │  DISPLAY   │         │
│   │ └──────────────┘ │         │  SECTION   │         │
│   │ ┌──────────────┐ │         └────────────┘         │
│   │ │    DATA      │ │                                 │
│   │ │ COMPARISON   │─┼─33b   36──┌────────────┐        │
│   │ │   SECTION    │ │          │  RECORD    │        │
│   │ └──────────────┘ │          │  SECTION   │        │
│   └──────────────────┘          └────────────┘        │
└──────────────────────────────────────────────────────┘
```

# FIG. 4

START

PLACE TEST CHART | S001

READ TEST CHART | S002

TRANSFER IMAGE DATA | S003

RECEIVE IMAGE DATA | S004

SPECIFY MEASUREMENT REGION | S005

CALCULATE STANDARD DEVIATION | S006

WITHIN ALLOWABLE RANGE? | S007

NO

JUDGE THAT NOISE IS GENERATED | S008

YES

JUDGE THAT NO NOISE IS GENERATED | S009

RECORD MEASURED DATA | S010

END? | S011

NO

YES

DISPLAY RESULTS | S012

END

# FIG. 5

START

PLACE TEST CHART | S021

READ TEST CHART | S022

TRANSFER IMAGE DATA | S023

RECEIVE IMAGE DATA | S024

SPECIFY MEASUREMENT REGION | S025

CALCULATE AVERAGED DENSITY OF LONGITUDINAL LINE | S026

CALCULATE AVERAGED DENSITY OF ENTIRE REGION | S027

COMPARE AVERAGED DENSITY OF LONGITUDINAL LINE WITH AVERAGED DENSITY OF ENTIRE REGION | S028

S029
WITHIN ALLOWABLE RANGE?

NO

JUDGE THAT NOISE IS GENERATED | S030

YES

JUDGE THAT NO NOISE IS GENERATED | S031

RECORD MEASURED DATA | S032

NO

S033
END?

YES

DISPLAY RESULTS | S034

END

# FIG. 6

START

PLACE TEST CHART — S041

READ TEST CHART — S042

TRANSFER IMAGE DATA — S043

RECEIVE IMAGE DATA — S044

SPECIFY MEASUREMENT REGION — S045

CALCULATE AVERAGED DENSITY OF TRANSVERSE LINE — S046

CALCULATE AVERAGED DENSITY OF ENTIRE REGION — S047

COMPARE AVERAGED DENSITY OF TRANSVERSE LINE WITH AVERAGED DENSITY OF ENTIRE REGION — S048

WITHIN ALLOWABLE RANGE? — S049

NO

JUDGE THAT NOISE IS GENERATED — S050

YES

JUDGE THAT NO NOISE IS GENERATED — S051

RECORD MEASURED DATA — S052

END? — S053

NO

YES

DISPLAY RESULTS — S054

END

# FIG. 7

START

PLACE TEST CHART  S061

READ TEST CHART  S062

TRANSFER IMAGE DATA  S063

RECEIVE IMAGE DATA  S064

SPECIFY MEASUREMENT REGION  S065

CALCULATE AVERAGED DENSITIES OF LONGITUDINAL LINES  S066

COMPARE AVERAGED DENSITIES OF LONGITUDINAL LINES  S067

WITHIN ALLOWABLE RANGE?  S068

NO

JUDGE THAT NOISE IS GENERATED  S069

YES

JUDGE THAT NO NOISE IS GENERATED  S070

RECORD MEASURED DATA  S071

END?  S072

NO

YES

DISPLAY RESULTS  S073

END

31

# FIG. 8

```
            ( START )
                |
   | PLACE TEST CHART | S081
                |
   | READ TEST CHART | S082
                |
| TRANSFER IMAGE DATA | S083
                |
                |
        | RECEIVE IMAGE | S084
        |     DATA      |
                |
  | SPECIFY MEASUREMENT REGION | S085
                |
  | CALCULATE AVERAGED         | S086
  | DENSITIES OF TRANSVERSE LINES |
                |
 | COMPARE AVERAGED DENSITIES OF | S087
 |      TRANSVERSE LINES         |
                |
              S088
   NO      / WITHIN    \
  <------ <  ALLOWABLE  >
          \   RANGE?   /
              |
            YES
 | JUDGE THAT |
 | NOISE IS   | S089
 | GENERATED  |
              | JUDGE THAT | S090
              | NO NOISE IS|
              | GENERATED  |
                |
        | RECORD      | S091
        | MEASURED DATA|
                |
              S092
   NO        / END? \
  <-------- <        >
              |
            YES
        | DISPLAY RESULTS | S093
                |
            ( END )
```

# FIG. 9

14a

RESOLUTION
MEASUREMENT
APPARATUS

| TEST CHART | ~2 |

| READ MEANS | → | CUT-OUT MEANS | → | ANALYZING MEANS | → | JUDGEMENT MEANS |

3　　　　　4　　　　　5　　　　　6

# FIG. 10

```
        ( START )
            │
            ▼
┌─────────────────────────┐
│      READ IMAGE         │ S101
└─────────────────────────┘
            │
            ▼
┌─────────────────────────┐
│   CUT OUT GRADATION     │ S102
│    PATTERN PORTION      │
└─────────────────────────┘
            │
            ▼
┌─────────────────────────┐
│      DETECT MARK        │ S103
└─────────────────────────┘
            │
            ▼
┌─────────────────────────┐
│  CUT OUT PORTION TO BE  │ S104
│        MEASURED         │
└─────────────────────────┘
            │
            ▼
┌─────────────────────────┐
│   CALCULATE MAXIMUM     │ S105
│  GRADATION DIFFERENCE   │
└─────────────────────────┘
            │
            ▼
┌─────────────────────────┐
│     JUDGMENT AS TO      │
│ NON-DEFECTIVE/DEFECTIVE,│ S106
│   AND RECORD OF DATA    │
└─────────────────────────┘
            │
            ▼        S107
          ╱   ╲
    NO   ╱ IS TEST╲
  ◄─────╱ COMPLETED?╲
         ╲         ╱
          ╲       ╱
            │ YES
            ▼
┌─────────────────────────┐
│   DISPLAY TEST RESULT   │ S108
└─────────────────────────┘
            │
            ▼
         (  END  )
```

34

# FIG. 11

# FIG. 12

(a)

BAR   SPACE

SINGLE CCD ELEMENT

(b)

BAR   SPACE

SINGLE CCD ELEMENT

(c)

BAR   SPACE

SINGLE CCD
ELEMENT

# FIG. 13

BAR  SPACE          SINGLE CCD ELEMENT

E0 E1 E2 E3 E4 E5 E6 — — — E20 E21

E22 E23 E24 E25 E26 E27 E28 — — — E42 E43

# FIG. 14

Line1 → Line1 MAXIMUM GRADATION DIFFERENCE

Line2 → Line2 MAXIMUM GRADATION DIFFERENCE

Linen-1 → Linen-1 MAXIMUM GRADATION DIFFERENCE

Linen → Linen MAXIMUM GRADATION DIFFERENCE

# FIG. 15

EP 0 998 113 A1

# FIG. 16

```
                    ( START )
                        |
            | PLACE TEST CHART | S111
                        |
          | READ TEST CHART | S112
                        |
        | TRANSFER IMAGE DATA | S113
                        |
              | RECEIVE IMAGE DATA | S114
                        |
          | SPECIFY MEASUREMENT REGION | S115
                        |
          | CALCULATE GRADATION
            DIFFERENCE FOR EACH PIXEL | S116
                        |
              | DETECT MAXIMUM
                GRADATION DIFFERENCE | S117
                        |
                                    S118
        NO        GREATER THAN
     <----- VALUE FOR NON-DEFECTIVE/
             DEFECTIVE JUDGEMENT
        |                   |
   | INSUFFICIENT RESOLUTION |  S119  YES
   | (DEFECTIVE)           |          |
        |              | SUFFICIENT RESOLUTION
        |                (NON-DEFECTIVE) | S120
        |                   |
              | RECORD MEASURED DATA | S121
                        |
                            S122
        NO          < END? >
     <-----             |
                       YES
              | DISPLAY RESULTS | S123
                        |
                     ( END )
```

# FIG. 17

```
                    ┌──────────┐
                    │  START   │
                    └────┬─────┘
                         │
         ┌───────────────┴────────────────┐
         │ DETECT AND STORE ANOMALOUS PIXELS │ S131
         └───────────────┬────────────────┘
                         │
     ┌───────────────────┴────────────────────┐
     │ SET NUMBER OF PIXELS IN MEASUREMENT AREA │ S132
     └───────────────────┬────────────────────┘
                         │
         ┌───────────────┴────────────────┐
         │      SET INITIAL VALUE FOR      │ S133
         │ MAXIMUM GRADATION DIFFERENCE    │
         └───────────────┬────────────────┘
                         │
         ┌───────────────┴────────────────┐
         │    SET FIRST MEASUREMNT PIXEL    │ S134
         └───────────────┬────────────────┘
                         │
         ┌───────────────┴────────────────┐
         │    SET NEXT MEASUREMENT PIXEL    │ S135
         └───────────────┬────────────────┘
                         │
    NO      ⟨ IS MEASUREMENT PIXEL PROPER ? ⟩ S136
                         │ YES
                         │
  ⟨ IS GRADATION DIFFERENCE WITH ADJACENT          ⟩ S137
  ⟨ PIXEL GREATER THAN CURRENTLY STORED            ⟩   NO
  ⟨ MAXIMUM GRADATION DIFFERENCE?                  ⟩
                         │ YES
         ┌───────────────┴────────────────┐
         │ STORE MAXIMUM GRADATION DIFFERENCE │ S138
         └───────────────┬────────────────┘
                         │
   NO  ⟨ HAS MEASUREMENT BEEN COMPLETED           ⟩ S139
       ⟨ FOR ENTIRE MEASUREMENT REGION?           ⟩
                         │ YES
         ┌───────────────┴────────────────┐
         │        NON-DEFECTIVE/           │ S140
         │      DEFECTIVE JUDGMENT         │
         └───────────────┬────────────────┘
                         │
         ┌───────────────┴────────────────┐
         │      DISPLAY TEST RESULT        │ S141
         └───────────────┬────────────────┘
                         │
                    ┌────┴─────┐
                    │   END    │
                    └──────────┘
```

# FIG. 18

START

SET NUMBER OF PIXELS IN MEASUREMENT REGION — S151

SET INITIAL VALUE FOR RED-COLOR MAXIMUM GRADATION DIFFERENCE — S152

SET INITIAL VALUE FOR GREEN-COLOR MAXIMUM GRADATION DIFFERENCE — S153

SET INITIAL VALUE FOR BLUE-COLOR MAXIMUM GRADATION DIFFERENCE — S154

SET FIRST MEASUREMENT PIXEL — S155

SET NEXT MEASUREMENT PIXEL — S156

IS RED-COLOR GRADATION DIFFERENCE GREATER THAN CURRENTLY STORED MAXIMUM GRADATION DIFFERENCE? — S157 — NO

YES

STORE RED-COLOR MAXIMUM GRADATION DIFFERENCE — S158

IS GREEN-COLOR GRADATION DIFFERENCE GREATER THAN CURRENTLY STORED MAXIMUM GRADATION DIFFERENCE? — S159 — NO

YES

STORE GREEN-COLOR MAXIMUM GRADATION DIFFERENCE — S160

IS BLUE-COLOR GRADATION DIFFERENCE GREATER THAN CURRENTLY STORED MAXIMUM GRADATION DIFFERENCE? — S161 — NO

YES

STORE BLUE-COLOR MAXIMUM GRADATION DIFFERENCE — S162

NO — HAS MEASUREMENT BEEN COMPLETED FOR ENTIRE MEASUREMENT REGION? — S163

YES

NON-DEFECTIVE/DEFECTIVE JUDGMENT — S164

DISPLAY TESY RESULT — S165

END

# FIG. 19

NON-DEFECTIVE/DEFECTIVE
JUDGMENT S164

START

IS RED-COLOR GRADATION
DIFFERENCE GREATER THAN
STANDARD VALUE FOR
RED COLOR ?
S164a
NO

YES

IS GREEN-COLOR GRADATION
DIFFERENCE GREATER THAN
STANDARD VALUE FOR
GREEN COLOR ?
S164b
NO

YES

IS BLUE-COLOR GRADATION
DIFFERENCE GREATER THAN
STANDARD VALUE FOR
BLUE COLOR ?
S164c
NO

YES

NON-DEFECTIVE
(SUFFICIENT
RESOLUTION)
S164e

DEFECTIVE
(INSUFFICIENT
RESOLUTION)
S164d

END

# FIG. 20

NON-DEFECTIVE/DEFECTIVE
JUDGMENT S164

START

IS RED-COLOR GRADATION
DIFFERENCE GREATER THAN
STANDARD VALUE FOR
RED COLOR ?   S164h  NO

YES

IS GREEN-COLOR GRADATION
DIFFERENCE GREATER THAN
STANDARD VALUE FOR
GREEN COLOR ?   S164i  NO

YES

IS BLUE-COLOR GRADATION
DIFFERENCE GREATER THAN
STANDARD VALUE FOR
BLUE COLOR ?   S164j  NO

YES

IS SUM OF MAXIMUM GRADATION
DIFFERENCES OF THREE COLORS
GREATER THAN THREE-COLOR
STANDARD VALUE ?   S164k  NO

YES

NON-DEFECTIVE
(SUFFICIENT
RESOLUTION)   S164m

DEFECTIVE
(INSUFFICIENT
RESOLUTION)   S164l

END

# FIG. 21

NON-DEFECTIVE/DEFECTIVE
JUDGMENT S164

START

IS RED-COLOR GRADATION
DIFFERENCE GREATER THAN
STANDARD VALUE FOR
RED COLOR ?
S164r
NO

YES

IS GREEN-COLOR GRADATION
DIFFERENCE GREATER THAN
STANDARD VALUE FOR
GREEN COLOR ?
S164s
NO

YES

IS BLUE-COLOR GRADATION
DIFFERENCE GREATER THAN
STANDARD VALUE FOR
BLUE COLOR ?
S164t
NO

YES

IS SUM OF MAXIMUM GRADATION
DIFFERENCES OF THREE COLORS
MULTIPLIED BY RESPECTIVE
COEFFICIENTS GREATER THAN
THREE-COLOR STANDARD VALUE ?
S164u
NO

YES

NON-DEFECTIVE
(SUFFICIENT
RESOLUTION)
S164w

DEFECTIVE
(INSUFFICIENT
RESOLUTION)
S164v

END

# FIG. 22

START

SET INITIAL VALUE FOR MAXIMUM GRADATION
DIFFERENCE OF EACH OF SCAN LINES TO BE MEASURED | S171

SET FIRST SCAN LINE | S172

STORE MAXIMUM GRADATION
OF FIRST SCAN LINE | S173

SET NEXT SCAN LINE | S174

STORE MAXIMUM GRADATION OF
NEXT SCAN LINE | S175

NO — HAS MEASUREMENT BEEN
COMPLETED UP TO LAST SCAN LINE ? | S176

YES

SORT MAXIMUM GRADATION DIFFERENCES OF
RESPECTIVE SCAN LINES IN ASCENDING
(DESCENDING) ORDER, AND REMOVE N LARGEST
DIFFERENCES AND M SMALLEST DIFFERENCES | S177

CALCULATE AVERAGE OF GROUP OF MAXIMUM
GRADATION DIFFERENCES | S178

NON-DEFECTIVE/DEFECTIVE JUDGMENT | S179

DISPLAY TEST RESULT | S180

END

# FIG. 23

# FIG. 24

(a) CCD OUTPUT

(b) READ IMAGE

# FIG. 25

```
        11                              12

┌─────────────────────────┐   ┌──────────────────────────────┐
│      TEST CHART         │   │      IMAGE READER            │
└─────────────────────────┘   │                              │
  ┌───────────────────────────┤           21                 │
  │                            │                              │
  │   ┌──────────────┐ ─22     │  ┌────────────────────┐      │
  │   │ LIGHT SOURCE │─────────┤  │                    │      │
  │   │    LAMP      │         │  │                    │      │
  │   └──────────────┘         │  │    CALCULATION     │      │
  │   ┌──────────────┐ ─23     │  │     CONTROL        │      │
  │   │ CCD ELEMENTS │─────────┤  │     SECTION        │      │
  │   └──────────────┘         │  │                    │      │
  │   ┌──────────────┐ ─24     │  │                    │      │
  │   │READ MOVEMENT │─────────┤  └────────────────────┘      │
  │   │   SECTION    │         │                              │
  │   └──────────────┘         └──────────────────────────────┘
```

```
                                              15

┌────────────────────────────────────────────────────────────┐
│                        MEASUREMENT APPARATUS                 │
│         52                          51                       │
│  ┌──────────────────┐     ┌────────────────────┐             │
│  │ DRIVER PROGRAM   │─────│   CALCULATION       │             │
│  └──────────────────┘     │    CONTROL          │             │
│                           │    SECTION          │             │
│                           └────────────────────┘             │
│                                    │                         │
│                              55    │                         │
│                           ┌──────────┐                       │
│                           │ DISPLAY  │                       │
│                           │ SECTION  │                       │
│                           └──────────┘                       │
│                                    │                         │
│                     56 ┌──────────────┐                      │
│                        │   RECORD     │                      │
│                        │   SECTION    │                      │
│                        └──────────────┘                      │
└────────────────────────────────────────────────────────────┘
```

# FIG. 26

START

PLACE TEST CHART — S201

READ TEST CHART — S202

TRANSFER IMAGE DATA — S203

RECEIVE IMAGE DATA — S204

DISPLAY IMAGE DATA — S205

VISUAL CHECK — S206

WITHIN ALLOWABLE RANGE? — S207

NO → JUDGE THAT NOISE IS GENERATED — S208

YES → JUDGE THAT NO NOISE IS GENERATED — S209

RECORD MEASURED DATA — S210

END

48

# FIG. 27

TEST CHART 71

IMAGE READER 12

CALCULATION CONTROL SECTION 21

LIGHT SOURCE LAMP 22

CCD ELEMENTS 23

READ MOVEMENT SECTION 24

MEASUREMENT APPARATUS 16

DRIVER PROGRAM 62

CALCULATION CONTROL SECTION 61

DISPLAY SECTION 66

RECORD SECTION 67

# FIG. 28

START

PLACE TEST CHART   S301

READ TEST CHART   S302

TRANSFER
IMAGE DATA   S303

RECEIVE IMAGE
DATA   S304

DISPLAY IMAGE DATA   S305

VISUAL CHECK   S306

S307
WHITE/BLACK
BARS
RECOGNIZED ?

NO

YES

INSUFFICIENT
RESOLUTION
(DEFECTIVE)   S308

SUFFICIENT
RESOLUTION
(NON-DEFECTIVE)   S309

RECORD
MEASURED DATA   S310

END

# FIG. 29

## (a)

GROUP NUMBER

ELEMENT
NUMBER

## (b)

| RESOLUTION (dpi) | PATTERN (GROUP-ELEMENT) | SIZE (LPM) | BAR WIDTH (mm) |
|---|---|---|---|
| 800 | 3RD G - 6TH E | 14.3 | 0.0350 |
| 1200 | 4TH G - 4TH E | 22.6 | 0.0221 |
| 2400 | 5TH G - 4TH E | 45.3 | 0.0110 |

# FIG. 30

(a) HIGH CONTRAST

BAR    SPACE    BAR    SPACE    BAR

SINGLE CCD
ELEMENT

(b) LOW CONTRAST

BAR    SPACE    BAR    SPACE    BAR

SINGLE CCD
ELEMENT

(c) LOW CONTRAST

BAR    SPACE    BAR    SPACE    BAR

SINGLE CCD
ELEMENT

# INTERNATIONAL SEARCH REPORT

| | |
|---|---|
| International application No. | PCT/JP99/02241 |

**A. CLASSIFICATION OF SUBJECT MATTER**
Int.Cl⁶ H04N1/00, H04N1/04, G06T1/00

According to International Patent Classification (IPC) or to both national classification and IPC

**B. FIELDS SEARCHED**

Minimum documentation searched (classification system followed by classification symbols)
Int.Cl⁶ H04N1/00, H04N1/04, G06T1/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–1999 |
| Kokai Jitsuyo Shinan Koho | 1971–1996 | Jitsuyo Shinan Toroku Koho | 1996–1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 61-238169, A (NEC Corp.), 23 October, 1986 (23. 10. 86) (Family: none) | 1-10 |
| Y | JP, 5-268417, A (Fuji Xerox Co., Ltd.), 15 October, 1993 (15. 10. 93) (Family: none) | 11-15 |
| A | JP, 9-98264, A (Canon Inc.), 8 April, 1997 (08. 04. 97) (Family: none) | 1-19 |
| A | JP, 7-111565, A (Canon Inc.), 25 April, 1995 (25. 04. 95) (Family: none) | 1-19 |
| A | JP, 6-6589, A (Fuji Xerox Co., Ltd.), 14 January, 1994 (14. 01. 94) (Family: none) | 1-19 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 August, 1999 (12. 08. 99) | 24 August, 1999 (24. 08. 99) |

| Name and mailing address of the ISA/ Japanese Patent Office | Authorized officer |
|---|---|
| Facsimile No. | Telephone No. |

Form PCT/ISA/210 (second sheet) (July 1992)